# EUROPÄISCHE PATENTSCHRIFT

(11) **EP 2 585 732 B1**
(45) Veröffentlichungstag und Bekanntmachung des Hinweises auf die Patenterteilung: **30.08.2017**
(21) Anmeldenummer: 11710684.9
(22) Anmeldetag: 11.03.2011
(51) Int. Cl.: F16D 65/56, F16D 66/02

(54) **SCHEIBENBREMSE UND HERSTELLUNGSVERFAHREN FÜR EINE SCHEIBENBREMSE**
DISK BRAKE AND PRODUCTION METHOD FOR A DISK BRAKE
FREIN À DISQUE ET PROCÉDÉ DE FABRICATION D'UN FREIN À DISQUE

(30) Priorität: 17.03.2010 DE 102010011725
(43) Veröffentlichungstag der Anmeldung: 01.05.2013
(60) Teilanmeldung: 13187357.2
(73) Patentinhaber: Haldex Brake Products AB, 261 24 Landskrona (SE)
(72) Erfinder: SANDBERG, Stefan, S-234 35 Lomma (SE); WELIN, Hans, S-260 13 Sankt Ibb (SE)
(74) Vertreter: Habermann, Hruschka & Schnabel
(86) Internationale Anmeldenummer: PCT/EP2011/001209
(87) Internationale Veröffentlichungsnummer: WO 2011/113554

(56) Entgegenhaltungen:
- WO-A1-01/75324
- DE-A1- 10 260 597
- DE-A1-102006 020 550
- DE-A1-102008 028 265

## Beschreibung

Die vorliegende Erfindung betrifft eine Scheibenbremse, insbesondere für ein Nutzfahrzeug, und ein Verfahren zur Herstellung bzw. Montage einer solchen Scheibenbremse.

Hierbei sind von der Erfindung Scheibenbremsen umfasst, die entweder einen Gleitsattel oder einen Festsattel aufweisen, und die eine oder mehrere Bremsscheiben übergreifen. Die Erfindung bezieht sich hauptsächlich, aber nicht ausschließlich, auf Teilbelag-Scheibenbremsen.

Scheibenbremsen, insbesondere für Schwerlastkraftwagen, sind in den unterschiedlichsten Ausführungsformen bekannt, sowohl was die Art des Betätigungsmechanismus, die Art und Weise der Übertragung der Bremskraft auf eine oder mehrere Bremsscheiben als auch die Art der Nachstellung zum Ausgleich des Bremsbelagverschleißes angeht.

So ist beispielsweise aus der EP 0 271 864 B1 eine Betätigungsvorrichtung bekannt, bei welcher ein axiales Betätigungsglied in einem Bremssattelgehäuse gelagert ist, um welches mehrere Komponenten des Bremsmechanismus angeordnet sind. Die hierfür vorgesehene Nachstelleinrichtung und der zur Anwendung kommende Verstärkungsmechanismus in der Form eines Rollen-Rampen-Mechanismus weisen eine Vielzahl von Einzelkomponenten auf, welche die Montage erschweren und daher kostenintensiv gestalten. Darüber hinaus muss im Zusammenhang mit der Montage der bei dieser Scheibenbremse zum Einsatz kommende Bremssattel sowohl auf der rückwärtigen Seite des Bremssattelgehäuses als auch auf der Seite zur Bremsscheibe hin mit vielen Öffnungen versehen werden, mit denen allerdings erhebliche Dichtprobleme einhergehen.

Des Weiteren ist aus der EP 0 553 105 B1 ein Bremsmechanismus bekannt, der zur Übertragung der Zuspannkraft einen Hebelmechanismus verwendet. Dieser Bremsmechanismus ist zwar weniger komplex als der vorhergehend Erwähnte, jedoch erweist sich dessen Montage in dem Bremssattelgehäuse als umständlich und daher zeitaufwendig, da während des Zusammenbaus im Inneren des Gehäuses eine drehbare Verbindung zwischen einem Druckstück und dem Hebel über einen zwischen diesen anzuordnenden Rollenkörper ausgebildet und aufrechterhalten werden muss. Darüber hinaus lässt sich der so bewerkstelligte Bremsmechanismus nur von der Rückseite des Bremssattels her einführen, was eine relativ große Öffnung im rückwärtigen Teil des Bremssattelgehäuses oder gar einen zweiteiligen, mit einer Trennfuge versehenen Bremssattel bedingt, wodurch zwangsläufig erhebliche Dichtprobleme in Erscheinung treten. Zusätzlich ist es eine Folge der ausschließlichen Drehverbindung zwischen dem Hebel und dem Druckstück, das letzteres mangels eines kinematisch zusätzlich erforderlichen Freiheitsgrads unter leichter Neigung an dem Bremsklotz angreift, wodurch ein ungleicher Abrieb am Bremsbelag auftritt.

Um dieses letztgenannte Problem zu vermeiden, ist im Stand der Technik, beispielsweise in der EP 0 698 749 B1, vorgeschlagen worden, bei einem hebelbetätigten Bremsmechanismus einen solchen zusätzlichen Freiheitsgrad zur Verfügung zu stellen, so dass eine strenge axiale Linearführung des Druckstücks in Richtung auf die Bremsscheibe für ein planes Anliegen des Bremsbelags ermöglicht wird. Der in dieser Druckschrift offenbarte Bremsmechanismus wird während der Montage mit seinen einzelnen Komponenten sowohl von der Bremsscheibenseite als auch von der dieser abgewandten Seite des Bremssattels her eingeführt und im Inneren desselben zusammengebaut, wodurch wiederum mehrere, Dichtprobleme hervorrufende Öffnungen vorgesehen werden müssen. Darüber hinaus erweist sich eine derartige Montage ebenfalls als umständlich und daher kostenintensiv.

Aus der WO 01/75324 A1 ist ein Bremsmechanismus bekannt, bei welchem das Druckelement zur Übertragung der Zuspannkraft um einen zentralen Stab herum angeordnet ist. Bei der darin gezeigten Ausgestaltung des Bremsmechanismus kommt allerdings eine Vielzahl von Einzelkomponenten zum Einsatz, die auf komplizierte Weise zusammenwirken müssen. Der Bremsmechanismus verwendet eine Traverse, die einen erheblichen Raum im Bremssattel einnimmt, wodurch der Bremsmechanismus insgesamt ein hohes Gewicht aufweist und insgesamt eher unhandlich ist. Die Montage eines solchen Bremsmechanismus erweist sich folglich als umständlich.

Um die oben erwähnten Probleme und Nachteile der Scheibenbremsen des geschilderten Standes der Technik zu begegnen, schlägt die WO 2004/059187 A1 der Anmelderin vor, einen Betätigungsmechanismus in der Form eines einzigen axialen Stößels bzw. Druckelements auszubilden, das auf die Bremsscheibe einwirkt, wobei bereits im Bereich des Stößels eine Nachstelleinrichtung integriert ist. Der Stößel wird dabei mittels eines Stabs in dem Gehäuse des Bremssattels parallel zu der Rotationsachse der Bremsscheibe montiert. In einer besonderen Ausführungsform wirkt der Stößel unmittelbar mit einer darin integrierten Rückstellvorrichtung für das Druckelement zusammen, die mit dem Stab kooperiert.

Unabhängig von dem hierbei zum Einsatz kommenden Betätigungsmechanismus, wie er beispielsweise in Bezug auf die WO 2004/027281 A1 nachfolgend noch beschrieben wird, muss stets ein Ausgleich des durch den Abrieb am Bremsbelag auftretenden Spiels zwischen der Bremsscheibe und dem Bremsbelag am Bremsklotz bereitgestellt werden. Der Bremsbetätigungsmechanismus weist in dem hier in Rede stehenden Beispiel eines Stößels zumindest ein Druckelement auf, der die Zuspannkraft auf die Bremsscheibe über die Bremsbeläge überträgt. Das Druckelement weist hierfür zumindest ein drehbares Element auf, das mit einem weiteren Element so zusammenwirkt, dass sich beide Elemente gegeneinander axial verschieben können, wobei das letztere Element in dem Bremssattel in nichtdrehbarer Weise, jedoch axial verschieblich, geführt ist. Gemäß der WO 2004/059187 A1 ist es zur Realisierung dieses Prinzips vorgesehen, dass zwei hülsenartige Spindeln in einem Gewindeeingriff stehen, wobei eine äußere Hülse mit einem Innengewinde eine innere Hülse mit einem Außengewinde drehbar aufnimmt. Die äußere Hülse bzw. Außenspindel ist in dem Bremssattel oder in dessen Träger nicht-drehbar geführt, so dass eine Rotation der inneren Hülse bzw. Innenspindel zu einer linearen Verschiebung der Außenspindel relativ zu dieser führt, so dass die Außenspindel auf die Bremsscheibe zu oder von dieser weg bewegt werden kann, um das verschleißbedingte Spiel an den Bremsbelägen zu kompensieren.

Die nicht-drehbare Linearführung der Außenspindel in Axialrichtung kann beispielsweise dadurch realisiert werden, dass die Außenspindel unmittelbar oder über weitere Zwischenbauteile mit dem Bremsbelag bzw. dem Belaghalter in Verbindung steht, die wiederum selbst in dem Bremssattel oder in dem Sattelträger linear geführt sind. Mit anderen Worten, auf Grund der Tatsache, dass der Bremsklotz (Bremsbelag und Belaghalter), der Belaghalter oder der Bremsbelag selbst in dem Sattel oder in seinem Träger in Axialrichtung relativ zu der Bremsscheibe geführt sind, ohne verdrehen zu können, ist auch die mit diesen Bremskomponenten in Verbindung stehende Außenspindel ausschließlich axial und nicht-drehbar geführt. Dabei ist gewöhnlicherweise die Verbindung zwischen der Außenspindel, ggfs. über eine Druckplatte oder ähnliches, und dem Bremsbelag bzw. dessen Halter lösbar ausgebildet, um einen einfachen Belagwechsel zu ermöglichen, wie dies beispielsweise die EP 1 832 777 B1 vorschlägt.

Aus der DE 10 2006 020 550 A1 ist eine Scheibenbremse bekannt, die einen Bremssattel, der zumindest eine Bremsscheibe umgreift, und einen Bremsbetätigungsmechanismus aufweist, wobei der Bremsbetätigungsmechanismus einen Verstärkungsmechanismus zum Einleiten einer Zuspannkraft, eine Nachstelleinrichtung zum Ausgleich eines Belagverschleißes mit einer Momentkupplung, ein Druckelement zum Übertragen der Zuspannkraft auf die Bremsscheibe, und eine Rückstelleinrichtung aufweist. Diese Komponenten sind mittels eines in dem Gehäuse des Bremssattels in Axialrichtung unbeweglich gelagerten Stabs funktional zusammenwirkend montiert, wobei jedoch der Stab in diesem Gehäuse noch zusätzlich drehbar gelagert ist, um mit der Momentkupplung zum Zwecke der Übertragung der Nachstellbewegung entsprechend zusammenwirken zu können.

Aus dem geschilderten Stand der Technik erwächst das Bedürfnis, die darin auftretenden unterschiedlichen Probleme und Nachteile möglichst gleichzeitig zu beseitigen.

Es ist daher die Aufgabe der vorliegenden Erfindung, einen Bremsmechanismus zur Verfügung zu stellen, der gegenüber den aus dem Stand der Technik bekannten Vorrichtungen mit weniger Komponenten auskommt und eine geringere Komplexität aufweist. Damit einhergehen sollen ein geringerer Raumbedarf und ein geringeres Gewicht. Darüber hinaus soll sich der Bremsmechanismus durch eine verbesserte Stabilität auszeichnen und bedingt durch seinen Einbau in ein Bremssattelgehäuse eine verbesserte Abdichtung gestatten.

Eine noch weitere Aufgabe liegt in der Bereitstellung eines Bremsmechanismus, der leicht zu montieren ist und dessen einzelne Komponenten leicht und kosteneffektiv herzustellen sind.

Gelöst werden diese Aufgaben mit einer Scheibenbremse nach Anspruch 1 sowie mit einem Verfahren zur Herstellung einer solchen Scheibenbremse nach Anspruch 21.

Die Erfindung in jeder ihrer Ausführungsformen betrifft eine Scheibenbremse, die einen Bremssattel aufweist, vorzugsweise einen Gleitsattel, der zumindest eine Bremsscheibe umgreift, und des Weiteren einen Bremsbetätigungsmechanismus mit einem Verstärkungsmechanismus zum Einleiten einer Zuspannkraft, einer Nachstelleinrichtung zum Ausgleich eines Verschleißes der Bremsbeläge mit einer Momentkupplung, einem Druckelement zum Übertragen der Zuspannkraft auf die Bremsscheibe und einer Rückstelleinrichtung aufweist, wobei der Verstärkungsmechanismus, die Nachstelleinrichtung, das Druckelement und die Rückstelleinrichtung mittels eines in dem Gehäuse des Bremssattels in Axialrichtung gelagerten Stabs funktional zusammenwirkend in dem Bremssattel montiert sind.

Der Stab dient insbesondere auch dazu, die einzelnen Bremskomponenten in dem Gehäuse des Bremssattels in einer solchen Art und Weise zu montieren, dass diese parallel zu der Rotationsachse der Bremsscheibe wirken.

Der Stab ist gemäß der Erfindung so konzipiert, dass dieser in dem Gehäuse des Bremssattels unbeweglich, d.h. nicht drehbar gelagert ist. Seine Ausgestaltung und Dimensionierung ist so gewählt, dass die einzelnen Bremskomponenten in unterschiedlichen Moduleinheiten oder der Bremsbetätigungsmechanismus in seiner Gesamtheit als jeweils selbsttragende Einheiten auf dem Stab einerseits und dadurch in dem Gehäuse des Bremssattels andererseits getragen und im bremsscheibenabgewandten, rückwärtigen Gehäusebereich des Bremssattels gehalten werden.

Für den Fall einer Gleitsattelbremse ist der Bremssattel dabei relativ zu einer entsprechenden Achse des Fahrzeugs mittels eines an dieser Achse befestigten Trägers axial gleitend verschieblich angeordnet, wobei der Träger zumindest zwei Gleitbolzen aufweist. Es können jedoch auch drei oder vier Gleitbolzen vorgesehen werden, so dass der Gleitsattel in allen anderen Richtungen, jedoch nicht in der beabsichtigten Gleitrichtung, die der Betätigungsrichtung entspricht, in seiner Lage fixiert ist.

Der Gleitsattel ruht und gleitet auf den Gleitbolzen mittels abriebfesten Lagerelementen, die in dem Gehäuse des Bremssattels vorgesehen sind. Zu Zwecken der Verminderung von Lärmerzeugung einerseits und zu Zwecken der Vermeidung von Lager- und Führungsproblemen andererseits, die sich infolge von Herstellungstoleranzen einstellen könnten, können die Lagerelemente in dem Bremssattel elastisch gelagert sein. Hierbei wird der Raum, der die Lagerflächen umgibt, durch flexible Gummibälge, Endkappen, Abschlussdeckel oder ähnliches abgedichtet, so dass Schmutz und Wasser nicht eindringen können, wodurch ansonsten der Reibungswiderstand erhöht werden würde. Für den Fall des Einsatzes von End- bzw. Abschlusskappen sind diese bevorzugt mit einem Belüftungsmechanismus für einen Druckausgleich versehen, wie dieser in dem Deutschen Gebrauchsmuster Nr. 20 2009 003 262 der Anmelderin beschrieben ist, auf dessen Offenbarungsgehalt hiermit ausdrücklich Bezug genommen wird.

Alternativ ist es jedoch auch möglich, dass die Gleitbolzen an dem Bremssattel befestigt sind, während die elastischen Gleitlagerelemente an dem Träger des Sattels in entsprechender Weise angeordnet sind. In beiden Fällen eignen sich als Gleitlagerelemente vorzugsweise die in dem Deutschen Gebrauchsmuster Nr. 20 2008 006 779 der Anmelderin beschriebenen Gleitlager, auf dessen Offenbarungsgehalt hiermit ausdrücklich Bezug genommen wird.

Die Bremsbeläge sind an dem Träger in bekannter Art und Weise verschieblich angeordnet und werden hierfür durch eine entsprechende Öffnung auf der Oberseite des Bremssattels eingefügt. Die Lagefixierung der Bremsbeläge kann mittels entsprechender Haltebügel und Belaghaltefedern mit Sperrvorrichtungen bewerkstelligt werden, wie diese beispielsweise in dem Deutschen Gebrauchsmuster Nr. 20 2008 013 446 der Anmelderin beschrieben sind, auf dessen Offenbarungsgehalt hiermit ebenfalls ausdrücklich Bezug genommen wird.

Der Bremssattel ist vorzugsweise einstückig hergestellt und umfasst einen Gehäuseabschnitt zur Aufnahme des Bremsbetätigungsmechanismus und von weiteren Bremskomponenten und einen die Bremsscheibe und Bremsbeläge übergreifenden Brückenabschnitt. Alternativ ist es jedoch auch denkbar, dass der Gehäuseabschnitt und der Brückenabschnitt zwei getrennte Bauteile darstellen, die mittels Schraubbolzen oder ähnlichen Verbindungsmitteln zusammengehalten werden.

Der Gehäuseabschnitt weist zwei größere Hauptöffnungen auf. Eine rückwärtige Hauptöffnung dient dem Einfügen eines Krafteinleitungselements eines außerhalb des Bremssattels angesiedelten pneumatischen, hydraulischen oder elektromechanischen Aktuators. Die andere Hauptöffnung öffnet sich zu der Seite der Bremsscheibe hin und dient der Aufnahme eines Bremsbetätigungsmechanismus sowie dem Durchtritt eines Druckelements dieses Bremsbetätigungsmechanismus bei Bremsbetätigung. Darüber hinaus können noch diverse kleinere Nebenöffnungen im Bremssattel vorgesehen werden, die zu Zwecken der Herstellung und Montage, für das Anbringen und Bedienen einer Rückstellvorrichtung für die Nachstelleinrichtung, für Sensoren der unterschiedlichsten Art oder ähnliches benötigt werden.

In jeder Ausführungsform der Scheibenbremse gemäß der Erfindung weist die Nachstelleinrichtung für das Lüftspiel eine Momentkupplung auf. Diese Momentkupplung ist drehmomentgesteuert und dient der selektiven Übertragung einer drehrichtungsabhängigen Rotation zwischen Bauteilen der Momentkupplung, wie nachfolgend noch im Detail erläutert werden soll.

Gemäß der Erfindung ist die Momentkupplung als ein Rollen-Rampen-Mechanismus ausgebildet, der zwischen dem Verstärkungsmechanismus und dem Druckelement wirkt, wobei die Rollkörper des Rollen-Rampen-Mechanismus koaxial zu dem Stab beweglich angeordnet sind.

Mit anderen Worten, die Rollkörper des Rollen-Rampen-Mechanismus sind konzentrisch um den Stab auf einer Kreisbahn angeordnet und können sich auf dieser abschnittsweise in Rampenflächen bewegen bzw. abrollen, die auf dieser Kreisbahn liegen und in einander gegenüberliegenden Bauelementen des Rollen-Rampen-Mechanismus ausgeformt sind, wie nachfolgend noch beschrieben werden wird.

Darunter soll nicht ausschließlich verstanden werden, dass der Rollen-Rampen-Mechanismus ein Bauteil darstellt, das zwischen dem Druckelement oder Teilen davon und dem Verstärkungsmechanismus oder Teilen davon in kraftübertragender Weise angeordnet ist. Vielmehr schließt eine solche Anordnung nicht aus, dass das Druckelement oder Teile davon unmittelbar mit dem Verstärkungsmechanismus oder Teile davon kraftübertragend in Verbindung stehen können.

Des Weiteren ist es gemäß der Erfindung vorgesehen, dass der Verstärkungsmechanismus, die Nachstelleinrichtung, das Druckelement und die Rückstelleinrichtung auf der einen Seite und der Stab auf der anderen Seite so ausgestaltet und in Axialrichtung so dimensioniert sind, dass im eingebauten Zustand des Bremsbetätigungsmechanismus die Rückstelleinrichtung unter Ausbildung einer definierten Drehmomentbegrenzung für die Momentkupplung unter Vorspannung steht.

Gemäß der Erfindung ist es darüber hinaus vorgesehen, dass die Rückstelleinrichtung in Axialrichtung auf die Momentkupplung eine Federkraft ausübt.

In der funktionalen Ausgangslage des Bremsbetätigungsmechanismus wirkt diese Federkraft permanent.

Der Stab wird rückseitig in dem Gehäuseabschnitt des Bremssattels fixiert und setzt dadurch die Rückstelleinrichtung unter eine definierte Vorspannung, wobei die Rückstelleinrichtung an einer Seite auf die Momentkupplung und auf der gegenüberliegenden Seite auf das als Widerlager dienende Ende des Stabs in Richtung auf die Bremsscheibe wirkt. Hierzu soll auf das Montageverfahren gemäß der Erfindung verwiesen werden, welches nachfolgend noch im Detail beschrieben werden wird.

Vorzugsweise ist die Rückstelleinrichtung als ein elastisches Element, bevorzugt als eine Schraubenfeder ausgebildet und ist bremsscheibenseitig in einer am Ende des Stabs axial fest angeordneten Widerlagerschale aufgenommen. D.h., die Feder ist zwischen der Widerlagerschale und der Momentkupplung unter Teilkompression eingespannt.

Die Größe der sich hierdurch einstellenden Vorspannung ergibt sich in diesem Zusammenhang auch aus der Konfiguration der Rückstelleinrichtung selbst; d.h. beispielsweise bei einer Schraubenfeder aus der Anzahl der Windungen, dem zum Einsatz kommenden Material (Federkonstante) usw..

Die definierte Vorspannung soll gemäß der Erfindung dabei so gewählt sein, dass diese einerseits für eine gewünschte Rückstellung des Bremsbetätigungsmechanismus und andererseits für eine gewünschte Drehmomentbegrenzung für die Momentkupplung geeignet ist.

Die Drehmomentbegrenzung für die Momentkupplung in der Form des Rollen-Rampen-Mechanismus soll so festgelegt sein, dass eine aufgebrachte Rotation auf zumindest eines der Drehkomponenten der Nachstelleinrichtung übertragen wird, so lange das Drehmoment, das für diese Übertragung erforderlich ist, unterhalb eines Werts bleibt, der sich u. a. durch die von dem elastischen Element aufgebrachte Kraft, d.h. Federkraft, bestimmt.

Diese kraft- und drehmomentabhängige Anordnung bestimmt daher während des Bremsbetätigungshubs den Übergang von einem Zustand, bei dem mit geringer Kraft das Lüftspiel zwischen der Bremsscheibe und dem Bremsbelag ausgeglichen wird, und einem Zustand, bei dem mit hoher Kraft der bremsende Kontakt zwischen der Bremsscheibe und dem Bremsbelag stattfindet. Die kraft- und drehmomentabhängige Anordnung der Nachstelleinrichtung reagiert damit auf das zwischen der Bremsscheibe und den Bremsbelägen jeweils während der Bremsbetätigung und der Rückstellung vorherrschende Lüftspiel und stellt dadurch eine automatische Nachstellung dieses Lüftspiels sicher.

Auf Grund der Tatsache, dass gemäß der Erfindung die Rückstelleinrichtung auf der einen Seite und die Vorrichtung zur Drehmomentbegrenzung für den Übergang zwischen den beiden vorhergehend erwähnten Phasen bzw. Zuständen des Betätigungshubs auf der anderen Seite in einem einzigen Bauteil integriert bzw. zusammengefasst sind, wird der Aufbau des Bremsbetätigungsmechanismus insgesamt vereinfacht und durch weniger Bauteile das Gewicht, der Montageaufwand und die damit verbundenen Kosten minimiert. Auch verkürzt sich hierdurch die axiale Gesamtlänge des Bremsbetätigungsmechanismus.

Die Erfindung betrifft auch eine Scheibenbremse, bei welcher sich die Nachstelleinrichtung in Axialrichtung gegenüber der Rückstelleinrichtung auf der einen Seite und gegenüber dem Verstärkungsmechanismus auf der anderen Seite jeweils mittels eines friktionsarmen Lagerelements abstützt.

Die Nachstelleinrichtung umfasst, wie nachfolgend noch beschrieben werden soll, eine Nachstellspindel, die unter Ausbildung des Druckelements mit einem Druckstück, das mit einem Bremsbelag zusammenwirkt, in einem Gewindeeingriff steht, wobei das Druckstück in dem Gehäuse des Bremssattels axial drehfest geführt ist.

Der Rotation dieser Elemente wirkt eine Reibungskraft entgegen, die sich zwischen Bauteilen des Bremsbetätigungsmechanismus infolge der durch die Rückstelleinrichtung aufgebrachten Kraft ausbildet und über die Momentkupplung auf die Nachstellspindel übertragen wird.

Gemäß der Erfindung ist es deshalb vorgesehen, dass die Nachstelleinrichtung durch friktionsarme Lagerelemente innerhalb des Bremsbetätigungsmechanismus und zwar in Axialrichtung quasi "eingebettet" ist. Die Lagerelemente können dabei Kugel-, Rollen- oder Nadellager umfassen.

Erfindungsgemäß sind diese in dem Bremsbetätigungsmechanismus vorgesehenen Lagerelemente außerhalb bzw. neben dem eigentlichen Übertragungspfad für die bzw. d,em Kraftfluss der Bremsbetätigungskraft angeordnet. Daher können diese stets so ausgelegt werden, dass diese nicht großen Belastungen widerstehen müssen, denn auf Grund des erfindungsgemäßen Aufbaus des Bremsbetätigungsmechanismus läuft der Hauptkraftfluss bei Bremsbetätigung von dem Verstärkungsmechanismus unmittelbar in das Druckelement.

Des Weiteren ist die Anordnung und der Aufbau des Bremsbetätigungsmechanismus gemäß der Erfindung so konzipiert, dass neben den oben genannten Flächen, mit Ausnahme der Kontaktfläche zwischen der Nachstellspindel und dem Druckstück, keine weiteren Kontaktflächen in dem Bremsbetätigungsmechanismus selbst vorhanden sind, die dem Nachstellvorgang einen erhöhten reibungsbedingten Widerstand entgegensetzen könnten.

Hierdurch kann während des Betätigungshubs der Bereich des Übergangs zwischen der Ausgleichsbewegung für das Lüftspiel, wozu nur eine geringe Kraft von Nöten ist, und der Krafteinleitung bei Kontakt der Bremsbeläge mit der Bremsscheibe beim Bremsen, wenn wesentlich höhere Kräfte im Bremsbetätigungsmechanismus wirken, genauer festgelegt bzw. eingegrenzt werden, wodurch die Genauigkeit und Zuverlässigkeit der Verschleißkompensation verbessert wird.

Der die Momentkupplung ausbildende Rollen-Rampen-Mechanismus, der stets zwischen dem Verstärkungsmechanismus und dem Druckelement wirkt, ist ebenfalls vorzugsweise außerhalb des Kraftflusses der Zuspannkraft angeordnet. Idealerweise wirkt der Rollen-Rampen-Mechanismus hierbei mit zumindest einem der vorhergehend erwähnten friktionsarmen Lagerelemente mittelbar oder unmittelbar zusammen.

Für alle vorhergehend genannten Ausführungsformen kann der Verstärkungsmechanismus einen Hebel aufweisen, der sich auf zumindest einer quer zu dem Stab verlaufenden Exzenterlagerung abstützt, wobei zwischen dem Hebel und dem Druckelement zumindest ein Kraftübertragungselement angeordnet ist, durch welches die Zuspannkraft von dem Hebel in das Druckelement eingeleitet wird.

Die Exzenterlagerung stellt die Verstärkung der von einem Aktuator eingeleiteten Kraft zur Verfügung und kann bevorzugt in einer Art und Weise realisiert sein, wie dies in der Internationale Patentanmeldung WO 2004/027281 A2 der Anmelderin beschrieben ist, auf deren Offenbarungsgehalt hiermit ausdrücklich Bezug genommen wird.

Das Druckelement kann gemäß der Erfindung eine Nachstellspindel aufweisen, die mit einem Druckstück, das mit einem Bremsbelag zusammenwirkt, in einem Gewindeeingriff steht, wobei das Druckstück in dem Gehäuse des Bremssattels axial drehfest geführt ist. Vorzugsweise ist die Nachstellspindel als Hohlspindel ausgebildet, wobei die Rückstelleinrichtung und der Rollen-Rampen-Mechanismus im Inneren der Hohlspindel angeordnet sind. Hierdurch lässt sich die axiale Einbaulänge des Bremsbetätigungsmechanismus weiter verkürzen.

Die Nachstellspindel ist an ihrem bremsscheibenabgewandten Ende drehfest mit einem Zahnrad verbunden, das sowohl mit dem zumindest einem Kraftübertragungselement als auch mit dem Rollen-Rampen-Mechanismus zusammenwirkt. Hierzu dienen Verbindungsmittel, die eine Steckverbindung über einen Presssitz ausbilden, wie beispielsweise Stiftniete. Diese sind vorzugsweise an dem Zahnrad angeordnet, während in der zu dem Zahnrad gerichteten Stirnfläche der Nachstellspindel entsprechende Sackbohrungen vorgesehen sind.

Gemäß der Erfindung weist der Rollen-Rampen-Mechanismus einen Rampenkörper, der mit dem Zahnrad drehfest verbunden ist, und einen Lagerring auf, wobei die Rollkörper zwischen dem Rampenkörper und dem Lagerring frei beweglich gelagert sind.

Sowohl in dem Rampenkörper als auch in dem Lagerring sind einander gegenüberliegend auf einer konzentrisch um den Stab verlaufenden Kreisbahn aufeinander folgend mehrere Rampenflächen ausgebildet, in denen die Rollkörper aufgenommen sind. Bei einer relativen Verdrehung des Lagerrings zu dem Rampenkörper laufen die Rollkörper gegen Rampen in den Rampenflächen auf und können gegebenenfalls in die in Drehrichtung nächstliegende Rampenfläche überspringen. Die genaue Funktionsweise dieser Momentkupplung soll nachfolgend im Zusammenhang mit der Nachstellung des Lüftspiels noch detaillierter beschrieben werden.

In einer Ausführungsform stützt sich die Rückstelleinrichtung an dem bremsscheibenseitigen Ende des Stabs in einer Widerlagerschale ab und übt dadurch auf den Lagerring die Federkraft aus, die, wie vorhergehend erläutert, eine Drehmomentbegrenzung für die Momentkupplung verwirklicht.

Zusätzlich kann zwischen der Rückstelleinrichtung und dem Lagerring eine äußere Aufnahmehülse angeordnet sein, wobei zwischen dem Lagerring und der äußeren Aufnahmenhülse sowie zwischen dem Rampenkörper und dem Kraftübertragungselement jeweils ein friktionsarmes Lagerelement angeordnet ist.

In einer bevorzugten Ausführungsform schließen der Rampenkörper, die Rollkörper, der Lagerring und die äußere Aufnahmehülse eine innere Aufnahmehülse und eine Hohlwelle koaxial bzw. konzentrisch ein, wobei die innere Aufnahmehülse und die Hohlwelle auf dem Stab drehbar angeordnet sind.

Bevorzugt sind dabei die innere Aufnahmehülse und die Hohlwelle in Axialrichtung durch eine Freilauffeder, diese auf dem Stab koaxial einschließend, verbunden, wobei die Hohlwelle von dem Hebel in Drehung versetzbar angeordnet und die innere Aufnahmehülse mit dem Lagerring drehfest verbunden ist.

Das Zahnrad der Nachstellspindel steht mit einem Nachstellzahnrad in Eingriff, das in dem Gehäuse des Bremssattels drehbar gelagert und von außerhalb des Gehäuses in Drehung versetzbar ist.

Gemäß der Erfindung ist folglich des Weiteren eine separate Rückstellvorrichtung für die Nachstelleinrichtung vorgesehen, mit Hilfe von welcher die Nachstellvorrichtung in eine Position gebracht werden kann, die dann ein Auswechseln von vollständig verschlissenen Bremsbelägen ermöglicht.

Das auf einer in dem Gehäuse parallel zu dem Stab angeordneten Welle gelagerte Nachstellzahnrad oder Ritzel kämmt mit dem Zahnrad der Nachstelleinrichtung. Zumindest ein Ende der entweder konisch oder zylindrisch ausgestalteten Welle ist dabei so ausgestaltet, dass es mit einem entsprechenden Werkzeug von außen durch eine entsprechende Öffnung in dem Gehäuse des Bremssattels betätigt werden kann. Alternativ kann das bremsscheibenseitige Ende der Welle ebenfalls für eine Werkzeugaufnahme ausgestaltet sein. Durch einfaches Drehen der Welle mit dem Werkzeug wird das Nachstellzahnrad und dadurch das Zahnrad, das mit der Nachstellspindel in Verbindung steht, ebenfalls gedreht, wodurch die Nachstellspindel von der Bremsscheibe weg bewegt werden kann. Bei ausgetauschten Bremsbelägen kann durch Drehen in der entgegengesetzten Richtung die Nachstellspindel wieder in ihre funktionale Ausgangsposition überführt werden.

In einer weiteren bevorzugten Ausführungsform weist das Druckstück zumindest eine Führungstange auf, die parallel zu dem Stab außerhalb des Kraftflusses der Zuspannkraft in einer Öffnung in dem Gehäuse des Bremssattels gleitend geführt ist.

Dadurch ist das Druckstück nur axial verschieblich, jedoch nicht drehbar gelagert, so dass über den Gewindeeingriff mit der Nachstellspindel deren Rotation zu einer reinen Translationsbewegung des Druckstücks führt.

Wie vorhergehend bereits erläutert, dient gemäß der Erfindung insbesondere der Stab dazu, den Verstärkungsmechanismus und/oder die Nachstelleinrichtung und/oder das Druckelement und/oder die Rückstelleinrichtung als eine selbsttragende Montageeinheit zusammen zu halten.

Der Stab stellt im Wesentlichen die Lagerung und Führung für die einzelnen Komponenten des Bremsmechanismus zur Verfügung. Bei einem entsprechenden Gewicht des Druckelements kann es jedoch auch erforderlich werden, dass das Druckelement mit zusätzlichen Lagerhilfen versehen ist. So ist es beispielsweise möglich, das Druckelement über die Bremsbeläge an Lagerflächen im Träger oder im Sattel zu führen, wie dies vorhergehend bereits im Zusammenhang mit dem Europäischen Patent Nr. 1 832 777 der Anmelderin erwähnt wurde, auf dessen Offenbarungsgehalt hier ausdrücklich Bezug genommen wird. Unterschiedliche Führungs- und Lagerhilfen, insbesondere für das Druckelement, können dabei miteinander kombiniert werden.

Damit in das Innere der Nachstelleinrichtung mit der Momentkupplung kein Schmutz oder Wasser eindringen kann, ist das bremsscheibenseitige Ende des Druckstücks verschlossen. Dies kann beispielsweise mit einem separaten Deckel realisiert werden oder das Druckstück selbst ist zur Bremsscheibe hin vollständig verschlossen als ein einstückig gegossenes oder geschmiedetes Bauteil hergestellt. Die Ausführungsform mit einem abnehmbaren Deckel hat den Vorteil, dass die Rückstellfeder von außen auch noch nachträglich zugänglich ist und beispielsweise über ein entsprechendes Werkzeug zusätzlich unter eine gewünschte Vorspannung gesetzt werden kann, selbst wenn der gesamte Bremsbetätigungsmechanismus als eine vormontierte Einheit auf dem Stab in Gehäuse des Bremssattels montiert ist.

Koaxial zu dem Stab ist des Weiteren gemäß der Erfindung eine Dichtmanschette vorgesehen, die sich zwischen der Mantelfläche des Druckstücks und einer entsprechenden radial innenliegenden Lagerfläche des Gehäuses des Bremssattels erstreckt. Die Dichtmanschette kann sich beim Verschieben des Druckstücks in Axialrichtung umfalzen. Beide Enden der Dichtmanschette können mit durch Metalleinlagen versehene Verstärkungen ausgestattet sein, die an den entsprechenden Stellen des Druckstücks auf der einen Seite bzw. des Gehäuses des Bremssattels auf der anderen Seite unter Klemmwirkung, Presssitz, Federwirkung oder ähnlichem zur verliersicheren Anlage kommen.

Ist das vordere Ende des Druckstücks verschlossen, stellt die Dichtmanschette die einzige Abdichtung der bremsscheibenzugewandten Öffnung in dem Gehäuse des Bremssattels dar, die ein Eindringen von Schmutz und Wasser in das Innere verhindert und so den Bremsbetätigungsmechanismus schützt.

Die Scheibenbremse gemäß der Erfindung kann des Weiteren eine Sensoreineinrichtung für den Belagverschleiß aufweisen, die mittelbar oder unmittelbar mit dem Druckstück zusammenwirkt, wobei die Sensoreinrichtung als Einheit rückwärtig in das Gehäuse des Bremssattels einsetzbar ist und das Gehäuse des Bremssattels bis zu dem Druckstück parallel zu dem Stab frei durchsetzt.

Die Sensoreinrichtung ist als ein Modul ausgebildet, welches insgesamt ausgetauscht werden kann. In dem Gehäuse des Bremssattels ist dabei eine entsprechende Aufnahmeöffnung vorgesehen, in welcher die Sensoreinrichtung dicht eingefügt und fixiert wird.

Die Sensoreinrichtung weist ein Übertragungselement zum Übertragen der linearen Bewegung des Druckstücks in eine Rotationsbewegung und ein Sensorelement zur Erfassung der Rotationsbewegung auf.

Das Übertragungselement ist als eine an dem Druckstück angreifende Hülse ausgebildet, die relativ zu einem stationär, aber drehbar gelagerten Gewindeelement verschieblich angeordnet ist. Die Hülse steht mit dem Gewindeelement derart in Eingriff, dass beim Verschieben der Hülse, zusammen mit der linearen Bewegung des Druckstücks, das Gewindeelement in Drehung versetzt wird. An seinem bremsscheibenabgewandten Ende wirkt das Gewindeelement mit zumindest einem Sensorelement berührungslos zusammen.

Da das Gewindeelement lediglich rotiert, erfasst das Sensorelement die Drehbewegung, welche in einer entsprechenden Verwertungsschaltung des Sensorelements in den tatsächlich vorhandenen Verschleiß umgerechnet wird, der sich aus der durch das Druckstück vollführten linearen Nachstellbewegung ergibt.

Bevorzugt ist das zumindest eine Sensorelement als ein Hall-Sensor ausgebildet und wirkt mit zumindest einem an dem bremsscheibenabgewandten Ende des Gewindeelements angeordneten Magneten in an sich bekannter Art und Weise zusammen.

Um die Detektion des Verschleißes zu vereinfachen, ist in einer bevorzugten Ausführungsform die Gewindesteigung des Gewindeelements derart gewählt, dass über die gesamte mögliche lineare Verschiebung der Hülse durch das Gewindeelement maximal eine vollständige Drehbewegung durchgeführt wird. So lässt sich die Verwertungsschaltung vereinfachen, da nicht mehr als eine Umdrehung entsprechend einem maximal möglichen Verschleiß zugeordnet werden muss.

Um stets einen einwandfreien Kontakt der Hülse mit dem Druckstück sicherzustellen, insbesondere unter den im Bremsenbereich gegebenen Schwingungs- und Rüttelbelastungen, steht die Hülse in Axialrichtung unter Vorspannung. Eine das Gewindeelement umgebenden Feder stützt sich zwischen einem hinteren Gehäuseabschnitt der Sensoreinrichtung und der Hülse ab. Der freiliegende Bereich im expandierten Zustand der Sensoreinrichtung wird dabei durch einen entsprechenden Faltenbalg vor Schmutz geschützt.

Alternativ kann auch eine Sensoreinrichtung vorgesehen werden, die als Modul ausgebildet ist und direkt an der Welle für das Nachstellzahnrad angreift. Da das Nachstellzahnrad direkt mit dem Zahnrad für die Nachstellspindel gekoppelt ist, kann hierdurch die mit der Nachstellung korrelierende Drehbewegung des Zahnrads abgegriffen werden und in einer entsprechenden Verwertungsschaltung ausgewertet werden. Die gesamte Sensoreinrichtung ist als eine Einheit von der Welle abnehmbar, um einen Zugriff auf die Welle für ein Werkzeug während des Austauschens der Bremsbeläge zu ermöglichen.

Die Scheibenbremse gemäß der Erfindung eignet sich insbesondere für eine einfache Montage des Bremsbetätigungsmechanismus in dem Gehäuse des Bremssattels, wobei dem axialen Stab eine bedeutende Rolle zukommt.

Wie bereits vorhergehend erwähnt dient der Stab dazu, entweder alle Komponenten als ein einziges Modul oder mehrere Komponenten als separate Teilmodule, jeweils als vormontierte, selbsttragende Baueinheiten zusammen zu halten, je nachdem, wie die durch die Größe des Bremssattels vorgegebenen Bauraumverhältnisse sind, und so diese Module in dem Gehäuse des Bremssattels zu befestigen. Die separaten Teilmodule können dann abschließend im Inneren des Gehäuses des Bremssattels zusammengebaut werden.

Der Stab dient folglich einerseits als Führungsmittel und Befestigungsmittel für die Komponenten bei der Bremsbetätigung, der Nachstellung des Lüftspiels und der Rückstellung für die Scheibenbremse im zusammengebauten Zustand. Andererseits fungiert dieser als Montagehalterung in dem Gehäuse des Bremssattels während der Montage des Bremsbetätigungsmechanismus.

Gemäß der Erfindung wird daher ein Verfahren zur Herstellung einer Scheibenbremse mit den oben geschilderten Merkmalen vorgeschlagen, welches die Schritte aufweist:
- Einführen eines Nachstellzahnrads in das Gehäuse eines Bremssattels und Befestigen auf einer Welle in dem Gehäuse,
- Einführen einer ersten Einheit bestehend aus einem Verstärkungsmechanismus, einer Nachstelleinrichtung mit einem Zahnrad und einer Rückstelleinrichtung und einem diese zusammenhaltenden Stab in das Gehäuse des Bremssattels, wobei der Stab in einer rückwärtigen Öffnung des Gehäuses des Bremssattels eingeführt wird, so dass das Zahnrad mit dem Nachstellzahnrad in Gewindeeingriff gelangt,
- Anbringen eines Haltewerkzeugs mit einem Verstellwerkzeug, wobei das Verstellwerkzeug in dem Haltewerkzeug drehbar geführt ist, an dem Bremssattel derart, dass das Verstellwerkzeug an dem bremsscheibenseitigen Ende des Stabs angreift,
- Drehen des Verstellwerkzeugs, so dass ein gegenüberliegendes freies Ende des Stabs durch die rückwärtige Öffnung in dem Gehäuse des Bremssattels nach außen verschoben wird,
- Anbringen von zumindest einem Lager- und Befestigungsmittel an dem freien Ende des Stabs,
- Drehen des Verstellwerkzeugs in umgekehrter Richtung, so dass sich der Stab in umgekehrter Richtung verschiebt und das Lager- und Befestigungsmittel in der rückwärtigen Öffnung in dem Gehäuse des Bremssattels verspannt und dadurch der Stab in dem Gehäuse in Axialrichtung unbeweglich befestigt wird, und
- Entfernen des Haltewerkzeugs mit dem Verstellwerkzeug,
wobei nach der Befestigung des Stabs die Rückstelleinrichtung unter einer definierten Vorspannung steht.

Das Haltewerkzeug ist in einer Ausführungsform als eine U-förmige Klammer bzw. Zwinge ausgebildet, die den Gehäuseabschnitt zur Aufnahme des Bremsbetätigungsmechanismus zwischen der bremsscheibenseitigen Öffnung und der gegenüberliegenden Rückseite des Bremssattels umgreift, und zwar derart, dass sich das Haltewerkzeug relativ zu dem Gehäuseabschnitt des Bremssattels nicht verschieben kann und daher als ein Führungs- bzw. Lagermittel für das Verstellwerkzeug dient. Das Verstellwerkzeug ist in einem Gewinde des Klammerschenkels der Zwinge geführt, der an der bremsscheibenseitigen Öffnung angreift. Es handelt sich hierbei um eine Verstellschraube, die per Hand oder mit einem entsprechenden Werkzeug betätigt werden kann.

Als Lager- und Befestigungsmittel können beispielsweise Keilsplinte zum Einsatz kommen. Die Öffnung für den Stab in dem rückwärtigen Gehäuseabschnitt öffnet sich dabei kegelförmig nach außen, so dass bei der Bewegung des Stabs in entgegengesetzter Richtung die Keilsplinte gegen die kegelförmige Öffnung verklemmt werden und dadurch der Stab in seiner axialen Lage verspannt wird.

Die Montage des Bremsbetätigungsmechanismus kann mit unterschiedlichen Untermodulen erfolgen.

Ein erstes Untermodul besteht aus der oben beschrieben Einheit, wobei das Zahnrad noch fest mit einer Nachstellspindel verbunden ist.

Das erfindungsgemäße Verfahren weist in dieser Ausführungsform dann noch die weiteren Schritte auf:
- Einführen eines Drucksstücks mit einer daran angebrachten Dichtmanschette mit einem freien Ende in das Gehäuse des Bremssattels derart, dass die Nachstellspindel und das Druckstück in Gewindeeingriff gelangen.

Das Druckstück mit der Dichtmanschette bildet folglich hier ein zweites Untermodul aus.

In einer alternativen Ausführungsform gemäß der Erfindung besteht das erste Untermodul aus der oben beschriebenen Einheit, jedoch ohne eine fest mit dem Zahnrad verbundene Nachstellspindel, während das zweite Untermodul aus dem Druckstück und der Nachstellspindel, die beide bereits in einem Gewindeeingriff stehen, aufgebaut ist. Zusätzlich ist an dem Druckstück außenseitig eine Dichtmanschette angebracht.

Das erfindungsgemäße Verfahren in dieser Ausführungsform weist dann die weiteren Schritte auf:
- Einführen einer weiteren Einheit bestehend aus einem Druckelement mit einer Nachstellspindel und einem mit der Nachstellspindel in Gewindeeingriff stehenden Druckstück sowie aus einer an dem Druckstück angebrachten Dichtmanschette mit einem freien Ende in das Gehäuse des Bremssattels,
- Anbringen eines Haltewerkzeugs mit einem Verstellwerkzeug an dem Bremssattel derart, dass das Verstellwerkzeug an dem Druckstück angreift,
- Drehen des Verstellwerkzeugs, bis die Nachstellspindel mit dem Zahnrad in einer festen Verbindung steht, und
- Entfernen des Haltewerkzeugs mit dem Verstellwerkzeug.

Diese feste Verbindung wird schließlich dadurch erreicht, dass an dem Zahnrad in Axialrichtung abragende Stifte oder Nieten in entsprechende Bohrungen in der Stirnfläche der Nachstellspindel eingreifen und einen Presssitz ausbilden.

Um eine Drehbewegung des Druckstücks zu verhindern, ist dieses mit einer Führungsstange versehen.

Unabhängig davon, wie die einzelnen Untermodule gemäß den oben geschilderten Ausführungsformen des Verfahrens montiert werden, weist das erfindungsgemäße Verfahren die weiteren Schritte auf:
- Ausrichten der Führungsstange mit einer entsprechenden Führungsöffnung in dem Gehäuse des Bremssattels,
- Drehen des Nachstellzahnrads derart, dass sich das Druckstück unter gleitendem Einführen der Führungsstange in die Führungsöffnung auf die Nachstellspindel bewegt.

Danach schließen sich die weiteren Schritte an:
- Anbringen eines weiteren Haltewerkzeugs an dem Bremssattel zur axialen Führung einer das Druckstück umgreifenden Werkzeugschubmanschette, so dass die Werkzeugschubmanschette mit der Dichtmanschette in Kontakt gelangt,
- Verschieben der Werkzeugschubmanschette derart, dass die Dichtmanschette in das Gehäuse des Bremssattels verschoben wird, bis das freie Ende der Dichtmanschette an einer entsprechenden radialen Lagerfläche in dem Gehäuse des Bremssattels zur Anlage kommt, und
- Entfernen des Haltewerkzeugs mit der Werkzeugschubmanschette.
Dabei wird vorzugsweise ein Presssitz ausgebildet.

Das Haltewerkzeug für die Dichtmanschette ist ebenfalls als eine Art U-förmige Klammer ausgebildet, die das Gehäuse des Bremssattels umgreift. Der bremsscheibenseitigen Klammerschenkel weist einen Halbring mit einer Nut auf, in die die Werkzeugschubmanschette eingesteckt wird. An dem gegenüberliegenden Ende ist wiederum ein Verstellwerkzeug vorgesehen, beispielsweise eine Verstellschraube. Die Werkzeugschubmanschette greift an dem freien Ende der Dichtmanschette an und durch Verdrehen der Verstellschraube bewegt sich die Werkzeugschubmanschette zusammen mit der Dichtmanschette in das Innere des Bremssattels, bis die radiale Lagerfläche für die Dichtmanschette erreicht ist.

Nachdem dann auch diese Hilfsmontagemittel entfernt wurden, wird abschließend das Nachstellzahnrad gedreht, bis das Druckstück in seine Betriebsposition gelangt ist.

Gemäß der Erfindung kann bereits ein Teil der Vorspannung durch die Vormontage der Einheit aus Nachstelleinrichtung, Verstärkungsmechanismus und Rückstelleinrichtung auf dem Stab durch eine entsprechende Auswahl der axialen Dimensionierungen der einzelnen Komponenten realisiert werden. Diese Vorspannung kann durch entsprechende Sprengringe oder sonstige radiale Befestigungsmechanismen am Stab aufrechterhalten werden.

Die restliche Vorspannung, die die Federkraft auf die Momentkupplung bzw. die Drehmomentbegrenzung definiert, wird dann abschließend im Wege der Montage der Einheit in dem Bremssattel auf die Rückstelleinrichtung bzw. Feder aufgebracht.

Hierzu kann ein entsprechendes Druckwerkzeug verwendet werden, dass die Feder weiter komprimiert. In einer alternativen Ausführungsform ist an dem bremsscheibenseitigen Ende des Stabs ein Gewinde vorgesehen, aus das eine Gewindemutter aufgeschraubt ist, die mit der Widerlagerschale zusammen wirkt. Durch Drehen der Gewindemutter kann die Feder gegenüber den weiteren Bremskomponenten auf dem Stab in Axialrichtung weiter komprimiert und dadurch die für die Drehmomentbegrenzung benötigte Vorspannung ausgebildet werden.

Die abschließende Vorspannung, die größer als die durch die Vormontage erzeugte Vorspannung ist, wird letztendlich aufrechterhalten, indem der Stab mit den darauf bzw. um diesen herum axial fixierten Bremskomponenten in dem Gehäuse des Bremssattels durch das rückwärtige Lager- und Befestigungsmittel, beispielsweise eine Gewindemutter oder durch zwei Splintbolzenhälften, axial verspannt wird, wenn das Verstellwerkzeug zurück gedreht wird, so dass sich der Stab nicht mehr axial verschieben kann.

Die anfängliche Vorspannung reicht aus, den gesamten Bremsmechanismus mit seinen Bremskomponenten auf dem Stab zu halten. Die so ausgebildete selbsttragende Einheit kann auf einfache Art und Weise gelagert und transportiert werden, sowohl was die Montage im Bremssattel als auch zukünftige Wartungsarbeiten angeht.

Nachdem die abschließende Vorspannung aufgebracht wurde, lässt die Belastung auf die Sprengringe oder sonstige radiale Befestigungsmechanismen, mit denen die anfängliche Vorspannung aufrechterhalten wurde, nach, da die abschließende Vorspannung der Feder direkt in das Gehäuse des Bremssattels, das dann als Widerlager fungiert, eingeleitet wird. Auf Grund dieser Tatsache ist es möglich, dass die Nachstelleinrichtung überhaupt einwandfrei zurückgestellt werden kann, wobei dies durch eine minimale Kompression während dieses Montageschritts erreicht wird.

Die Erfindung zeichnet sich grundsätzlich durch den Vorteil aus, dass zur Montage des Bremsbetätigungsmechanismus und dessen Befestigung im Bremssattel neben dem Stab nur sehr wenige Befestigungsmittel notwendig sind. Die Teileanzahl ist dadurch im Vergleich zum Stand der Technik geringer, wodurch sich die Montage einfacher, schneller und kosteneffektiver durchführen lässt.

Darüber hinaus können sehr viele Normteile und rotationssymmetrische Bauteile zum Einsatz kommen, deren Herstellung ebenfalls wesentlich einfacher ist.

Der Bremsbetätigungsmechanismus gemäß der Erfindung zeichnet sich des Weiteren durch seine Kompaktheit vor allem in Axialrichtung bei gleichzeitig einwandfreier Funktionssicherheit aus, so dass auch die Länge des Bremssattels, einhergehend mit einer Gewichtsreduzierung, verkürzt werden kann. Der spezifische Aufbau des Bremsbetätigungsmechanismus gemäß der Erfindung lässt sich als eine Einheit bewegen und handhaben.

Weitere Vorteile und Merkmale der vorliegenden Erfindung ergeben sich aus den nachfolgend anhand der beiliegenden Zeichnungen dargestellten Ausführungsbeispiele. Es zeigen
- Fig. 1: eine Explosionsdarstellung der wesentlichen Bestandteile der Scheibenbremse gemäß der vorliegenden Erfindung;
- Fig. 2: eine Draufsicht, teilweise im Schnitt, der Scheibenbremse im zusammengebauten Zustand;
- Fig. 3: eine seitliche Schnittansicht der Scheibenbremse im zusammengebauten Zustand;
- Fig. 4: eine Explosionsdarstellung des Bremsbetätigungsmechanismus gemäß der Erfindung mit seinen einzelnen Komponenten;
- Fig. 5: einen vergrößerten Ausschnitt aus Fig. 2 zur Darstellung des Bremsbetätigungsmechanismus;
- Fig. 6: einen vergrößerten Ausschnitt aus Fig. 3 zur Darstellung des Bremsbetätigungsmechanismus;
- Fig. 7: eine seitliche Darstellung eines Bremsbetätigungsmechanismus in einer weiteren Ausführungsform gemäß der Erfindung;
- Fig. 8: eine Anordnung einer Sensoreinheit für die Bestimmung des Belagverschleißes gemäß der Erfindung;
- Fig. 9: die Sensoreinheit schematisch in Schnittdarstellung in ihrer Ursprungslage;
- Fig. 10: die Sensoreinheit schematisch in Schnittdarstellung in einem ausgefahrenen Zustand;
- Fig. 11: schematisch alle Komponenten für ein Verfahren zur Herstellung einer Scheibenbremse in einer ersten Ausführungsform gemäß der Erfindung;
- Fig. 12: schematisch einen ersten Schritt dieses Verfahrens;
- Fig. 13: schematisch eine Axialschnittdarstellung durch den Bremssattel nach dem ersten Schritt des Verfahrens;
- Fig. 14: schematisch eine Schnittdarstellung von oben durch den Bremssattel nach dem ersten Schritt des Verfahrens;
- Fig. 15: schematisch einen zweiten Schritt dieses Verfahrens;
- Fig. 16: schematisch alle Komponenten für ein Verfahren zur Herstellung einer Scheibenbremse in einer zweiten Ausführungsform gemäß der Erfindung;
- Fig. 17: schematisch einen dritten Schritt für das Verfahren in der zweiten Ausführungsform;
- Fig. 18: schematisch einen vierten Schritt für das Verfahren in der zweiten Ausführungsform;
- Fig. 19: schematisch einen fünften Schritt für das Verfahren sowohl in der ersten als auch in der zweiten Ausführungsform;
- Fig. 20: schematisch ein erstes Modul im montierten Zustand einer Scheibenbremse gemäß der Ausführungsform nach Fig. 7;
- Fig. 21a, b: schematisch einen sechsten Schritt für das Verfahren sowohl für die erste als auch für die zweite Ausführungsform; und
- Fig. 22: den montierten Bremsbetätigungsmechanismus nach Beendigung der Verfahrensschritte.

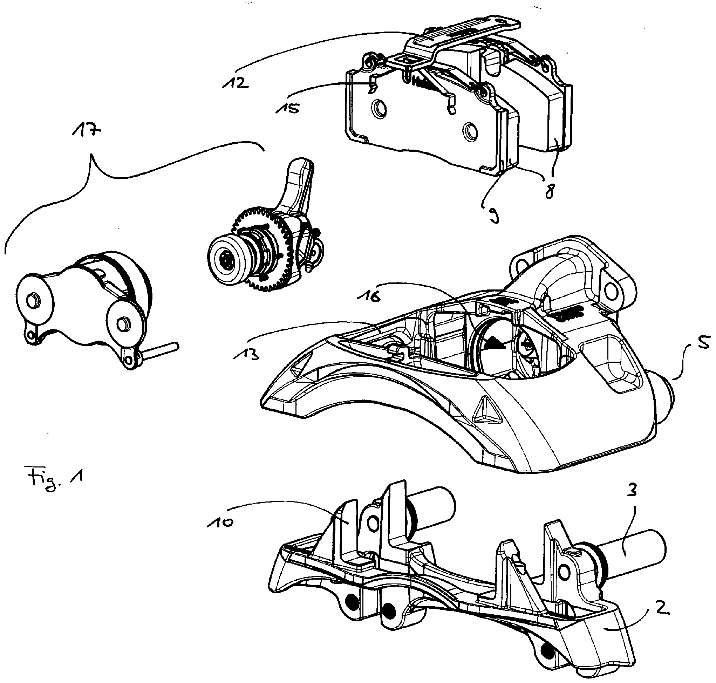

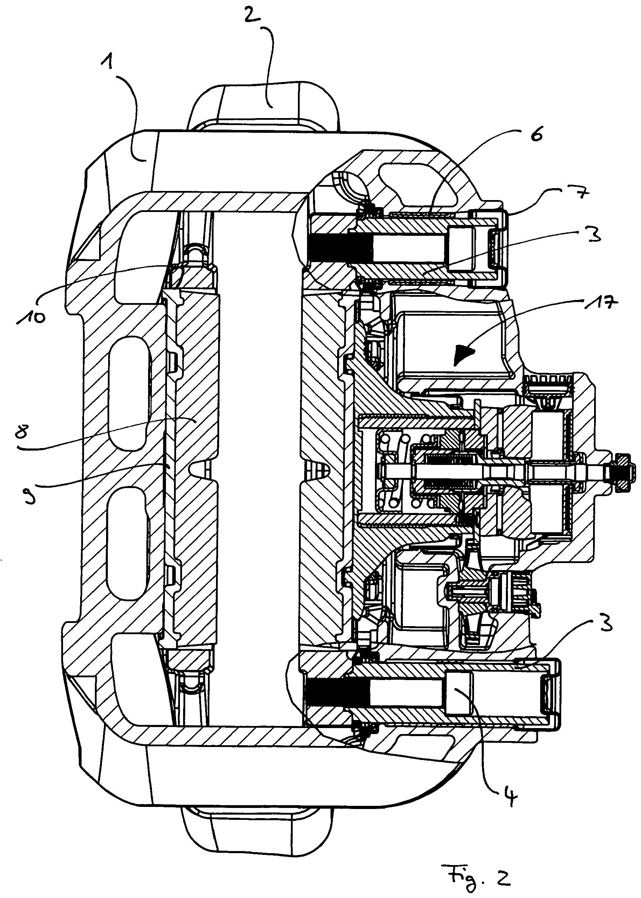

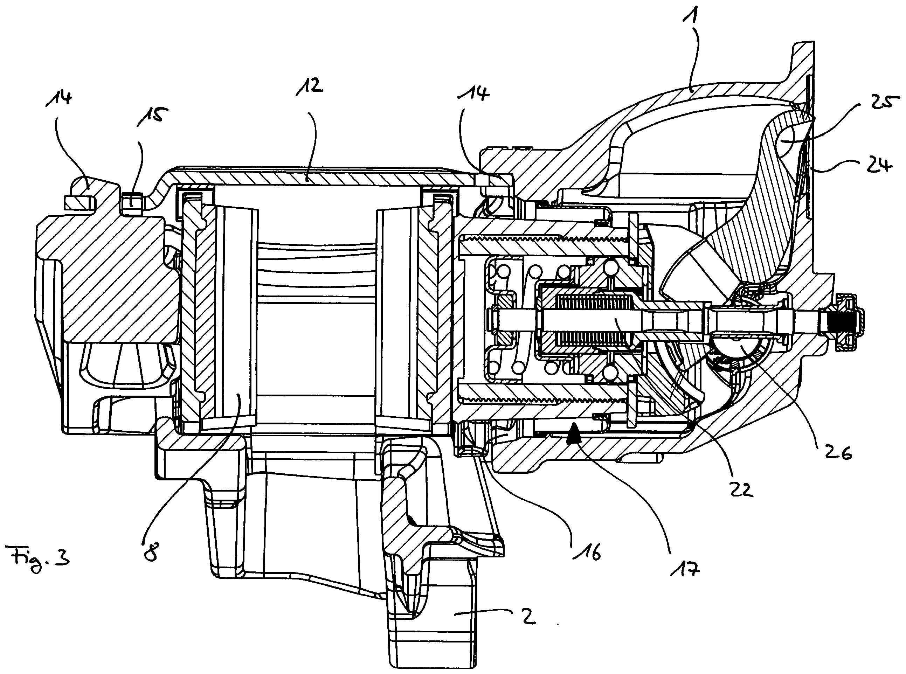

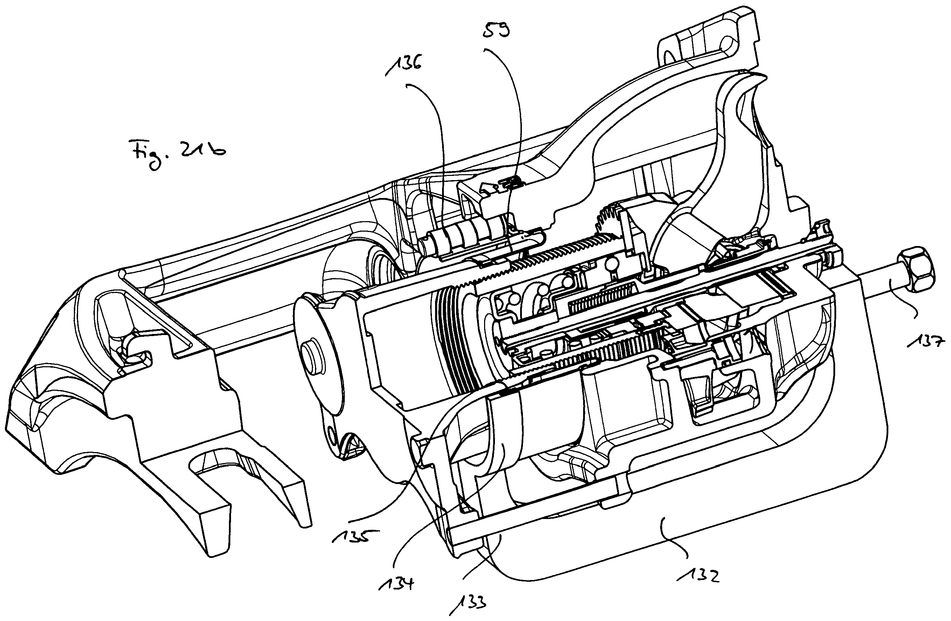

In Fig. 1 ist die erfindungsgemäße Scheibenbremse in Explosionsdarstellung mit ihren wesentlichen Bestandteilen gezeigt, die in den Fig. 2 und Fig. 3 jeweils in ihrem zusammengebauten Zustand wiedergegeben sind.

Die Scheibenbremse weist einen Bremssattel 1 auf, der auf einem Träger 2 gleitend geführt ist. Hierzu ist der Bremssattel 1 mittels Gleitlager 3 an dem Träger 2 geführt.

Die Gleitlager 3 sind mittels Bolzen 4 an dem Träger 2 befestigt und entsprechend in Öffnungen 5 in dem Gehäuse des Bremssattels 1 aufgenommen. Zwischen dem Gleitlager 3 und der Innenwand der Öffnungen 5 sind elastische Gleitlagerelemente 6 vorgesehen, wie diese beispielsweise in dem Deutschen Gebrauchsmuster Nr. 20 2008 006 779 der Anmelderin beschrieben sind.

Um eine einwandfreie Funktion des so ausgebildeten Gleitlagermechanismus zu gewährleisten, sind die Öffnungen 5 in dem Bremssattel 1 nach außen mittels Endkappen 7 abgedichtet, wie diese beispielsweise in dem Deutschen Gebrauchsmuster Nr. 20 2009 003 262 der Anmelderin beschrieben sind.

Der Bremssattel 1 über- bzw. umgreift Bremsbeläge 8, die auf Belaghaltern 9 befestigt sind. Die Belaghalter 9 mit den darauf angeordneten Bremsbelägen 8 sind in entsprechenden Führungen 10 des Trägers 2 axial geführt. Die Belaghalter 9 werden durch Belaghaltefedern 11 rüttelsicher verspannt, die sich hierfür an einem Haltebügel 12 abstützen, der eine nach oben gerichtete Öffnung 13 in dem Gehäuse des Bremssattels 1 überspannt, durch welche die Bremsbeläge 8 mit ihren Belaghaltern 9 zu Montagezwecken eingefügt und entnommen werden können. Zu seinen beiden Seiten unter- bzw. hintergreift der Haltebügel 12 entsprechende an dem Bremssattel 1 angeformte oder ausgebildete Vorsprünge oder Ausnehmungen 14, so dass der Haltebügel 12 nach oben nicht ausweichen kann und so ein Widerlager für die Belaghaltefedern 11 zu bilden vermag.

Ein Verschieben in Längsrichtung des Haltebügels 12 wird verhindert, indem dieser an einer Seite mit einer als Feder ausgebildeten Sperrvorrichtung 15 zusammen wirkt, die wiederum mit dem Bremssattel 1 verspannt ist, wie dies beispielsweise in dem Deutschen Gebrauchsmuster Nr. 20 2008 013 446 der Anmelderin beschrieben ist.

Die beiden Bremsbeläge 8 fassen eine hier nicht näher dargestellte Bremsscheibe ein, die auf einer entsprechenden Nabe oder einem mit der Nabe verbundenen Teil einer Radachse befestigt ist.

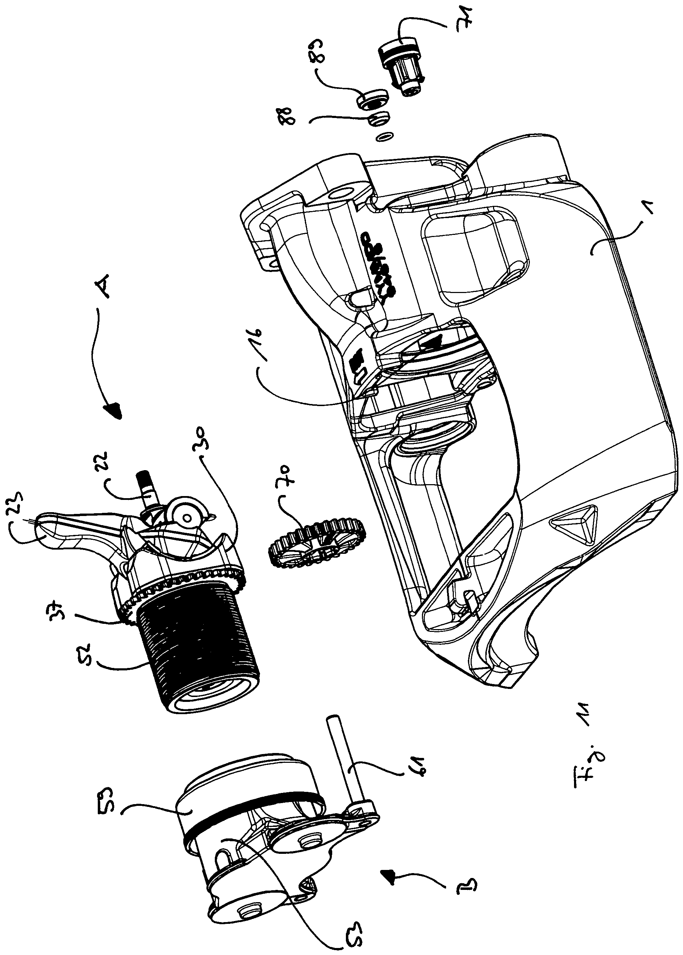

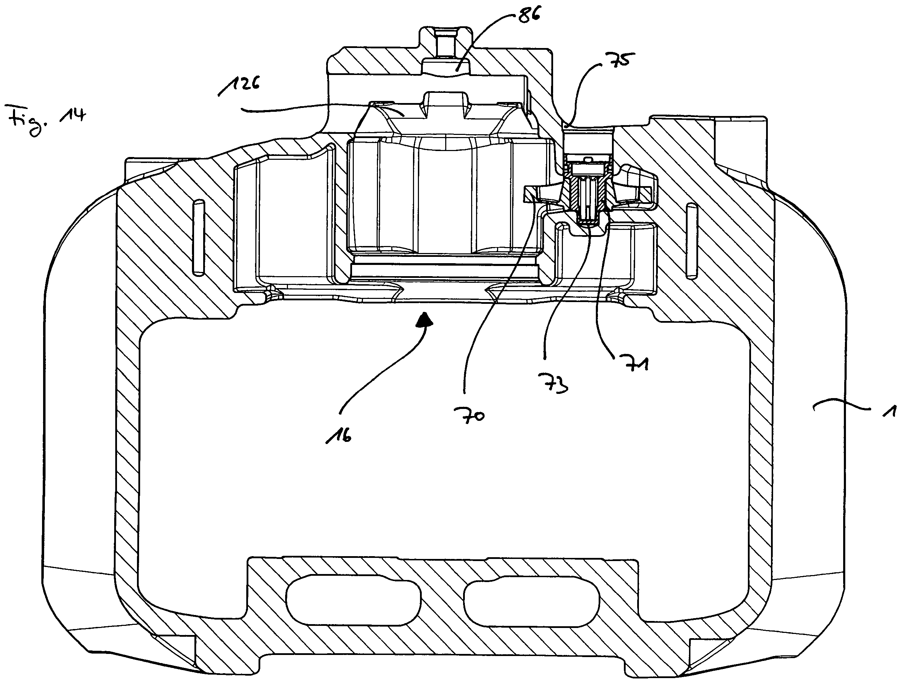

Wie in der Fig. 1 zu erkennen ist, weist der Bremssattel 1 bremsscheibenzugewandt eine Öffnung 16 auf, durch die ein Bremsbetätigungsmechanismus 17 auf die Bremsscheibe einwirken kann und durch welche, wie weiter unten im Zusammenhang mit den Figuren 11 bis 22 beschrieben ist, der Bremsbetätigungsmechanismus 17, je nach Ausführungsform, in unterschiedlichen Modulen im Gehäuse des Bremssattels 1 montiert wird.

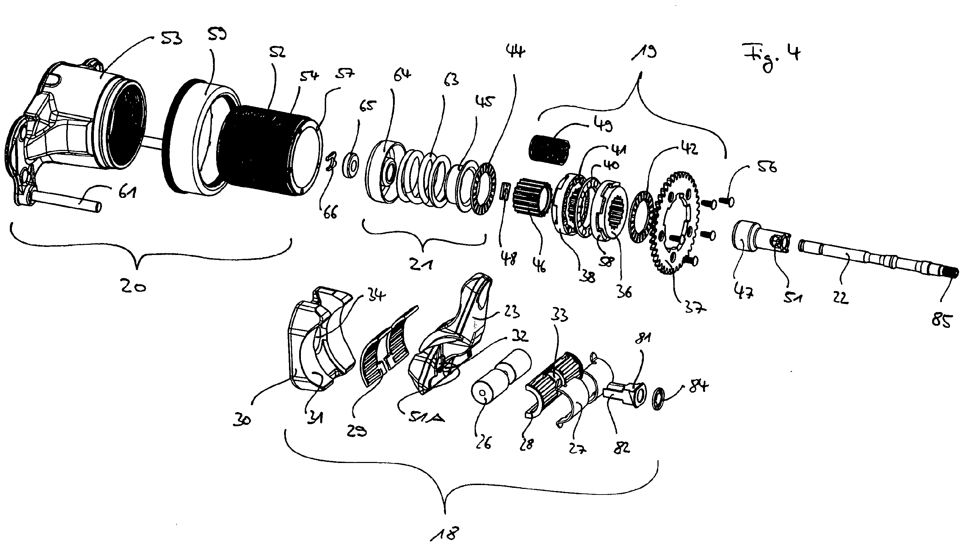

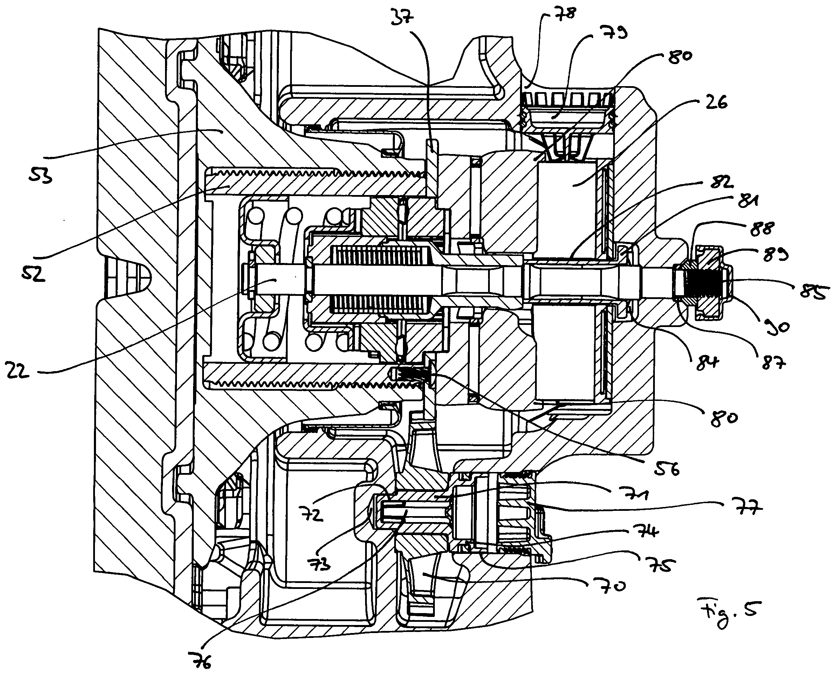

Fig. 4 zeigt in einer Explosionsdarstellung den Bremsbetätigungsmechanismus 17 in seinen Einzelteilen, während die Figuren 5 bis 7 diesen in seiner funktionalen Einbaulage in dem Gehäuse des Bremssattels 1 darstellen.

Der Bremsbetätigungsmechanismus 17 gemäß der Erfindung ist derart konzipiert, dass er einerseits eine einfache Montage in dem Bremssattel 1 gestattet und andererseits durch die spezielle Anordnung der Einzelteile zueinander eine einwandfreie Funktionsweise bei gleichzeitiger kompakter Bauweise ermöglicht.

Gemäß der Erfindung besteht der Bremsbetätigungsmechanismus 17 im Wesentlichen aus einem Verstärkungsmechanismus 18, der die von einem hydraulischen, pneumatischen oder elektromechanischen (oder einem diese Arten kombinierenden) Aktuator (hier nicht dargestellt) stammende Aktuatorkraft als Zuspannkraft in den Bremsbetätigungsmechanismus 17 einleitet und dabei entsprechend einem konstruktionsbedingt vorgegebenen Übersetzungsverhältnis verstärkt, aus einer Nachstelleinrichtung 19, die zum Ausgleich eines Bremsbelagverschleißes dient, aus einem Druckelement 20, das die verstärkte Zuspannkraft auf die Bremsscheibe überträgt, und aus einer Rückstelleinrichtung 21, um den Bremsbetätigungsmechanismus 17 in seine Ausgangslage zurückzustellen, wenn keine Bremskraft über den Aktuator, der sich außerhalb des Gehäuses des Bremssattels 1 befindet, mehr einwirkt.

Ein wesentliches Merkmal der Scheibenbremse gemäß der Erfindung ist hierbei, dass die vorgenannten Baugruppen auf einem zentralen Stab 22 angeordnet sind, der koaxial zu der Achse der Bremsscheibe ausgerichtet ist.

Der Stab 22 dient, wie aus der nachfolgenden Beschreibung deutlich wird, als Montagemittel für die einzelnen Baugruppen des Bremsbetätigungsmechanismus einerseits und als Befestigungsmittel für diesen in dem Gehäuse des Bremssattels 1 andererseits.

Der Verstärkungsmechanismus 18 weist einen Hebel 23 auf, an dessen oberen, eine Öffnung 24 in dem Bremssattel 1 durchgreifenden Ende 25 ein hier nicht dargestelltes Übertragungsmittel des Aktuators, beispielsweise ein Stab eines Pneumatikzylinders, angreift. Der Hebel 23 ist in einem rückwärtigen Gehäuseabschnitt des Bremssattels 1 schwenkbar gelagert, indem sich dieser an zwei Exzenterwalzen 26 drehbar abstützt. Die zylindrischen Exzenterwalzen 26 sind in einem entsprechenden, in zwei Lagerschalen 27 angeordneten Nadellagerkäfig 28 drehbar aufgenommen, wobei sich die Lagerschalen 27 in dem rückwärtigen Gehäuseabschnitt des Bremssattels 1 abstützen.

Der Hebel 23 ist dabei relativ zu den Exzenterwalzen 26 so konzipiert und ausgestaltet, das sich bei einer Schwenkbewegung um die Exzenterwalzen 26 eine exzentrische Verlagerung des Hebels 23 zu den Exzenterwalzen 26 einstellt, der zu einer Verstärkung der vom Aktuator in den Hebel 23 eingeleiteten Kraft führt. Zur genauen Ausgestaltung und Funktionsweise der Exzenterlagerung des Hebels 23 soll hiermit auf die Offenbarung der Internationalen Patentanmeldung Nr. 2004/027281 A2 der Anmelderin verwiesen werden, auf deren Offenbarungsgehalt hiermit ausdrücklich Bezug genommen wird.

Den Exzenterwalzen 26 gegenüberliegend stützt sich der Hebel 23 über weitere Nadellagerschalen 29 an einem Kraftübertragungselement 30 ab. Das Kraftübertragungselement 30 ist einstückig, vorzugsweise als Guss- oder Schmiedeteil, aufgebaut und weist hebelseitig zwei annähernd halbschalenartige Ausnehmungen 31 auf, die der Aufnahme der Nadellagerschalen 29 dienen. Bremsscheibenseitig ist das Kraftübertragungselement 30 mit planen Flächen ausgebildet, um, wie nachfolgend beschrieben werden wird, mit der Nachstelleinrichtung 19 und dadurch mit dem Druckelement 20 zusammen zu wirken.

Für den Durchgriff des zentralen Stabs 22 weist der Hebel 23 eine Öffnung 32, der Nadellagerkäfig 28 ein Öffnung 33 und das Kraftübertragungselement 30 eine Öffnung 34 auf, während die Lagerschalen 27, die Exzenterwalzen 26 und die Nadellagerschalen 29 jeweils zu beiden Seiten des Stabs 23 an entsprechenden Stellen angeordnet sind.

Unmittelbar anschließend an den Verstärkungsmechanismus 18 in Richtung zur Bremsscheibe schließt sich die Nachstelleinrichtung 19 an.

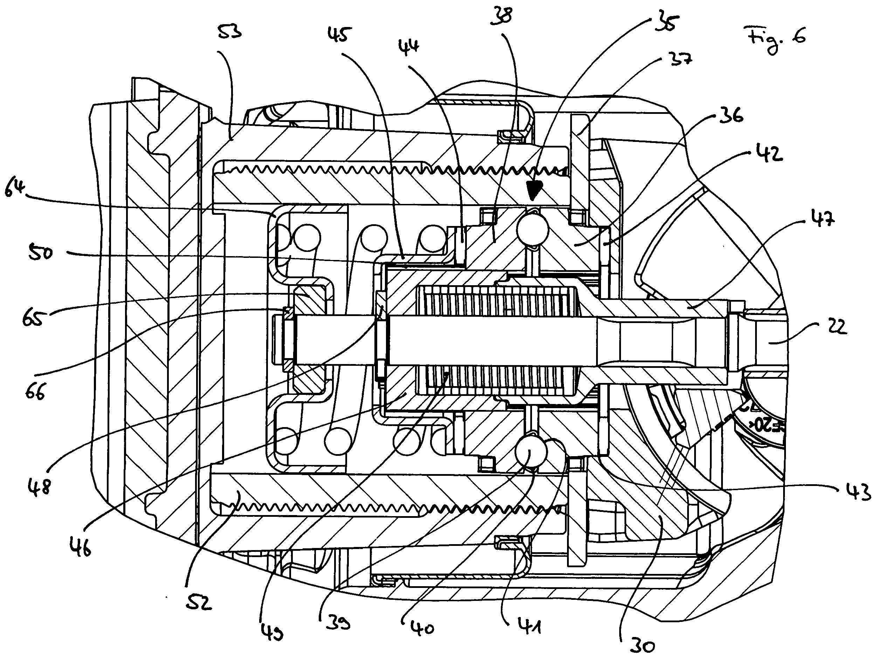

Die Nachstelleinrichtung 19 beinhaltet eine Momentkupplung, deren Funktionsweise nachfolgend noch erklärt werden soll. Die Momentkupplung ist als ein Rollen-Rampen-Mechanismus 35 ausgebildet, dessen Einzelteile am besten in der Fig. 6 zu sehen sind.

Der Rollen-Rampen-Mechanismus 35 weist einen Rampenkörper 36 auf, der auf seiner der Bremsscheibe abgewandten Seite mit einem Zahnrad 37 drehfest verbunden ist. Die Funktion des Zahnrads 37 soll weiter unten näher erläutert werden.

Dem Rampenkörper 36 gegenüberliegend ist ein Lagerring 38 vorgesehen. Der Lagerring 38 und der Rampenkörper 36 schließen mehrere Rollkörper 39 ein, die in einem Rollkäfig 40 geführt und koaxial um den Stab 22 beweglich zwischen dem Lagerring 38 und dem Rampenkörper 36 angeordnet sind.

Die Rollkörper 39 sind jeweils in Rampenflächen 41 aufgenommen, die einander gegenüberliegend in dem Lagerring 38 auf der einen Seite und dem Rampenkörper 36 auf der anderen Seite ausgebildet sind. Eine Rampenfläche 41 geht jeweils in die nachfolgende Rampenfläche 41 über, wobei alle Rampenflächen 41 auf einer geschlossenen Kreisbahn um den Stab 22 liegen. In Fig. 4 sind diese Rampenflächen 41 nur für den Lagerring 38 erkennbar. Hierbei kann jede Rampenfläche 41 jeweils in unterschiedliche Abschnitte unterteilt sein, die unterschiedliche Steigungswinkel aufweisen. Die Steigungswinkel können dabei so gewählt werden, dass sich beim Zusammenwirken mit der Vorspannung das begrenzende Drehmoment für die Momentkupplung besser abstimmen lässt.

Der Rampenkörper 36 stützt sich gegenüber dem Kraftübertragungselement 30 durch zumindest ein friktionsarmes Lagerelement 42 ab, das in einer zylindrischen Ausnehmung 43 in der bremsscheibenzugewandten Seite des Kraftübertragungselements 30 vorgesehen ist.

In analoger Weise stützt sich der Lagerring 38 über ein weiteres friktionsarmes Lagerelement 44 an einer äußeren Aufnahmehülse 45 ab.

Die äußere Aufnahmehülse 45 und teilweise der Lagerring 38 schließen koaxial eine innere Aufnahmehülse 46 und teilweise der Lagerring 38 und der Rampenkörper 36 mit den Rollkörpern 39 dazwischen schließen koaxial eine Hohlwelle 47 ein.

Die innere Aufnahmehülse 46 und die Hohlwelle 47 greifen an ihren Stirnseiten ineinander und sind auf dem zentralen Stab 22 drehbar gelagert, wobei die innere Aufnahmehülse 46 auf dem Stab 22 axial durch einen Sprengring 48 festgelegt ist.

Die Hohlwelle 47 und die innere Aufnahmehülse 46 wiederum schließen koaxial eine Freilauffeder 49 ein, wobei die radiale Außenfläche der Freilauffeder 49 jeweils mit den radialen Innenflächen der Hohlwelle 47 und der inneren Aufnahmehülse 46 in Verbindung steht, so dass diese beiden Elemente bei Bedarf drehfest verbunden werden können.

Die innere Aufnahmehülse 46 steht über eine Verzahnung 50 mit dem Lagerring 38 drehfest in Verbindung. Zusätzlich kann die Verzahnung hierbei zwischengelagerte Rollkörper oder Walzen aufweisen, um eine Rollenführung zwischen der inneren Aufnahmehülse 46 und dem Lagerring 38 auszubilden, der in Axialrichtung eine sehr geringe Reibung innewohnt.

Die Hohlwelle 47 wiederum weist ein zapfenartiges Element 51 auf, mit dem der Hebel 23 in Verbindung steht, wobei diese Verbindung so konzipiert ist, dass bei einer Schenkbewegung des Hebels 23 über das zapfenartige Element 51 die Hohlwelle 47 in eine Drehbewegung versetzt wird. Die Hohlwelle 47 durchsetzt dabei vollständig das Kraftübertragungselement 30.

Es ist in den Figuren zu erkennen, dass sämtliche Bauteile der Nachstelleinrichtung 19 als im Wesentlichen rotationssymmetrische Körper ausgebildet und koaxial um den Stab 22 angeordnet sind.

Die Nachstelleinrichtung 19 einfassend ist das Druckelement 20 vorgesehen, das ebenfalls koaxial zu dem Stab 22 angeordnet ist.

Das Druckelement 20 weist eine hohle Nachstellspindel 52 auf, die außenseitig mit einem Druckstück 53 über ein entsprechendes Gewinde 54 in Eingriff steht. Das Druckstück 53 spreizt sich zur Bremsscheibe hin aus Gründen der besseren Kraftverteilung trapezartig auf und ist über entsprechende Verbindungselemente, beispielsweise eine Zapfen-Nut-Verbindung 55, an dem Belaghalter 9 des innenliegenden Bremsbelags 8 befestigt, wie diese aus der Fig. 2 ersichtlich ist.

Die Nachstellspindel 52 ist an ihrer bremsscheibenabgewandten Stirnseite mit dem Zahnrad 37 der Nachstelleinrichtung 19 über entsprechende Verbindungselemente 56 drehfest verbunden, beispielsweise durch Stiftniete 56, die in entsprechenden Sackbohrungen 57 in der Stirnseite der Nachstellspindel 52 einen Presssitz ausbilden.

Das Zahnrad 37 wiederum steht mit dem Rampenkörper 36 über eine Keil-Nut-Verbindung 58 in einer drehfesten Verbindung.

Dadurch wird eine Drehbewegung des Rampenkörpers 36 mittelbar auf die Nachstellspindel 52 übertragen.

Außenseitig ist an dem Druckstück 53 eine Dichtmanschette 59 angeordnet, die den Freiraum zwischen dem Druckstück 53 und der jeweiligen Innenwand des Gehäuse des Bremssattels 1 zur Bremsscheibe hin abdichtet, um das Eindringen von Feuchtigkeit und Schmutz in den Innenraum des Bremssattels 1 auszuschließen, so dass die Funktionssicherheit des Bremsbetätigungsmechanismus 17 jederzeit sichergestellt ist.

Die Dichtmanschette 59 ist elastisch in Axialrichtung abrollbar und weist an ihren Stirnseiten jeweils, gegebenenfalls federnde, Metalleinlagen 60 auf, die eine einwandfreien Presssitz an den jeweiligen Anlagenflächen in dem Gehäuse des Bremssattels 1 zur Verfügung stellen.

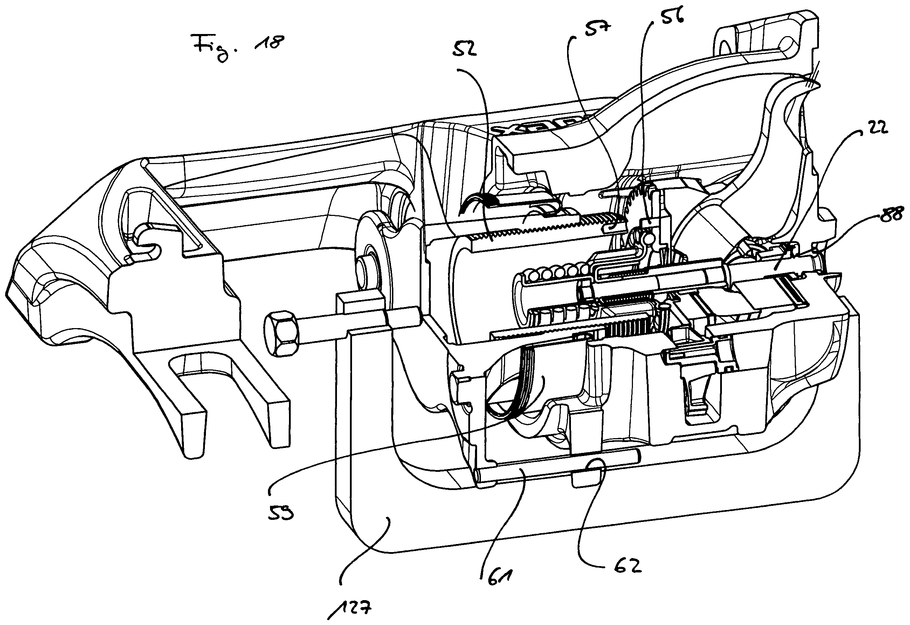

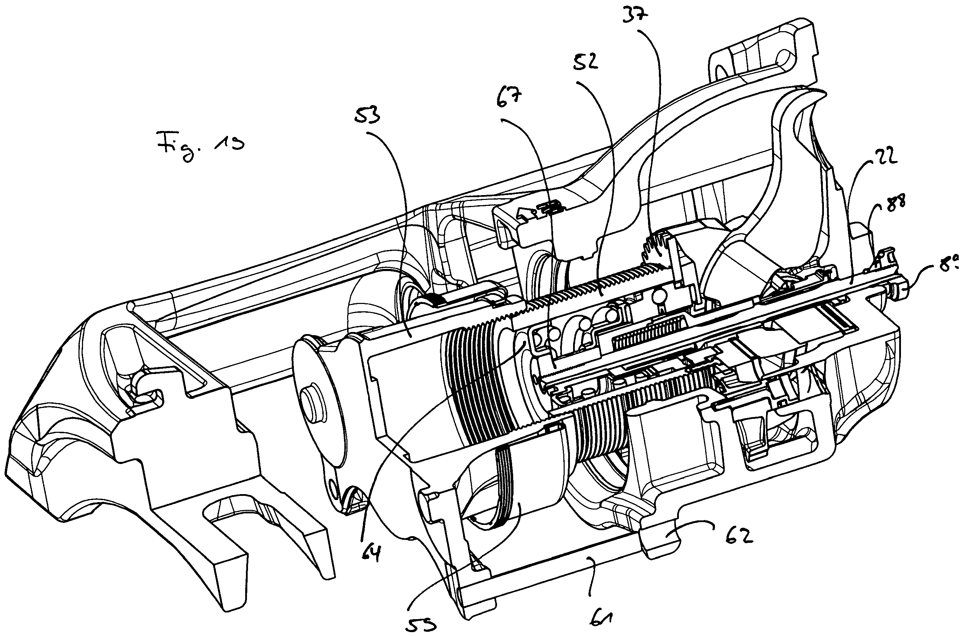

Das Druckstück 53 weist des Weiteren zumindest ein Führungselement, beispielsweise eine Führungstange 61 auf, die in einer entsprechenden Öffnung 62 in dem Bremssattel 1 aufgenommen ist, wie dies beispielsweise in den Fig. 18 und 19 zu erkennen ist. Dadurch wird sichergestellt, dass das Druckstück 53 relativ zu dem Bremssattel 1 drehfest geführt ist und eine Drehbewegung der Nachstellspindel 52 in eine axiale Längsbewegung des Druckstücks 53 übersetzt wird.

Die Nachstellspindel 52 schließt nicht nur die Nachstelleinrichtung 19, sondern auch die Rückstelleinrichtung 21 koaxial ein.

Die Rückstelleinrichtung 21 schließt sich in Axialrichtung zu der Bremsscheibe hin an die Nachstelleinrichtung 19 an und ist ebenfalls koaxial zu dem Stab 22 angeordnet.

Diese besteht aus einer Schraubenfeder 63, die sich bremsscheibenseitig an einer Widerlagerschale 64 abstützt. Die Widerlagerschale 64 ist an dem bremsscheibenseitigen Ende des Stabs 22 über einen Abstandsring 65 und einen Sprengring 66 axial positioniert und befestigt.

An ihrer gegenüberliegenden Seite stützt sich die Schraubenfeder 63 an der äußeren Aufnahmehülse 45 der Nachstelleinrichtung 19 ab. Auf diese Art und Weise kann die Rückstelleinrichtung 21 gleichzeitig als ein Mechanismus zur Aufbringung einer Drehmomentbegrenzung auf die Nachstelleinrichtung 19 fungieren, wie diese nachfolgend im Zusammenhang mit der Beschreibung des Funktionsweise der Nachstelleinrichtung 19 und des Bremsbetätigungsmechanismus 17 noch erläutert werden soll.

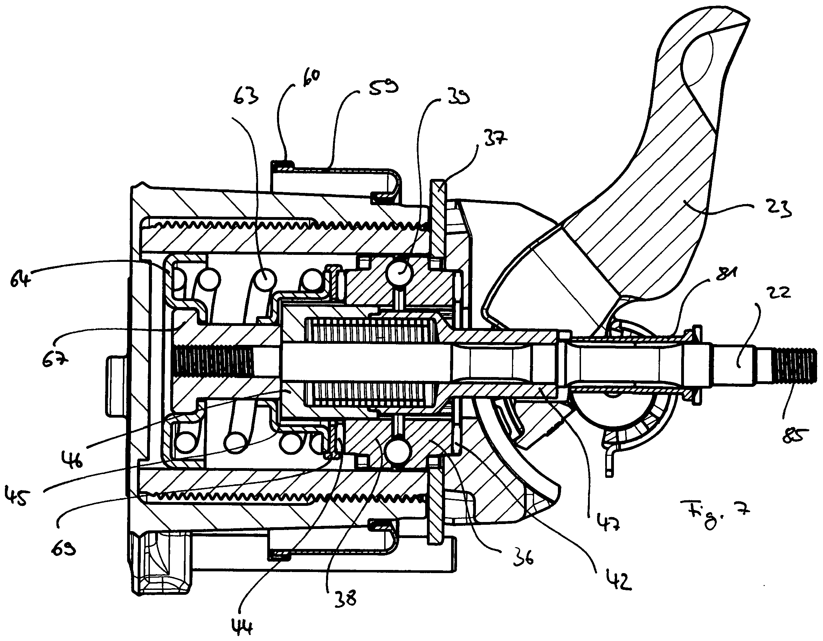

In Fig. 7 ist eine alternative Ausführungsform der Rückstelleinrichtung 21 gezeigt.

Auch in dieser stützt sich eine Schraubenfeder 63 an einer Widerlagerschale 64 ab. Die Widerlagerschale 64 wird hierbei jedoch axial auf dem Stab 22 mittels einer Gewindemutter 67 festgelegt, die auf ein bremsscheibenseitiges Gewinde 68 an dem Stab 22 aufgeschraubt wird. Durch gezieltes Verdrehen der Gewindemutter 67 relativ zu dem Stab 22 kann eine definierte Vorspannung auf die Schraubenfeder 63 aufgebracht werden.

Zusätzlich ist in dieser Ausführungsform zwischen der äußeren Aufnahmehülse 45 und dem friktionsarmen Lagerelement 44 noch ein Führungsring 69 vorgesehen. Der Führungsring 69 unterstützt die Positionierung sowie die axiale und radiale Führung der zu dem Führungsring 69 benachbarten Komponenten relativ zueinander.

Das friktionsarme Lagerelement 44 dient unter anderem auch dazu, das Risiko auszuräumen, dass vor allem bei Freigabe der Bremse ein geringfügiges Aufwickeln der Schraubenfeder 63 die Nachstellfunktion beeinflusst.

Wie in der Fig. 5 zu erkennen so, kämmt das Zahnrad 37 der Nachstelleinrichtung 19 mit einem Nachstellzahnrad 70, das auf einer Achse in dem Gehäuse des Bremssattels 1 gelagert ist, die parallel zu dem Stab 22 verläuft.

Die Achse wird durch eine Nachstellwelle bzw. einen Achskörper 71 gebildet, der eine entsprechende Verzahnung aufweist und mit seinem freien Ende 72 in einem in dem Gehäuse des Bremssattels 1 vorgesehenen Lagersackloch 73 und mit seinem gegenüberliegendem Ende 74 in einer von außen zugänglichen Öffnung 75 in dem Bremssattel 1 gelagert ist. Der Achskörper 71 wird quasi wie ein Stöpsel in die Öffnung 75 eingefügt, wobei allerdings solche Toleranzen vorgesehen sind, dass der Achskörper 71 ab einem bestimmten Drehmoment in der Öffnung 75 gedreht werden kann. Hierzu weist das Ende 74 des Achskörpers 71 eine Fassung 76 auf, die der Aufnahme eines Werkzeugs dient, mit Hilfe von welchem der Achskörper 71, damit das Nachstellzahnrad 70 und hierdurch wiederum das Zahnrad 37 mit der Nachstellspindel 52 in Drehung versetzt werden kann, wie weiter unter noch erläutert werden soll.

Die Öffnung 75 ist durch eine entsprechend geformte Verschlusskappe 77 von außen dicht verschließbar.

Das Gehäuse des Bremssattels 1 weist noch eine weitere seitliche Montageöffnung 78 auf, die in axialer Verlängerung zu der Drehachse der Exzenterwalzen 26 vorgesehen ist.

Durch diese Öffnung 78 kann die Montage und Ausrichtung der Lagerschalen 27 und des Nadellagerkäfigs 28 sowie der Exzenterwalzen 26 bewerkstelligt und unterstützt werden. Darüber hinaus lassen sie über die Öffnung 78 die Lagerflächen im Inneren des Gehäuses des Bremssattels 1 maschinell bearbeiten.

Die Montageöffnung 78 ist ebenfalls durch einen abdichtenden Stöpsel 79 verschließbar. Quer zur Axialrichtung, d.h. seitlich nach außen, werden die Exzenterwalzen 26 durch an dem Hebel 23 vorstehende Kanten 80 geführt und positioniert. An den gegenüberliegenden Seiten sind die Exzenterwalzen 26 durch eine Abstandshülse 81, die quasi die inneren seitlichen Lagerflächen 82 für beide Exzenterwalzen 26 zur Verfügung stellt, vom Stab 22 getrennt.

Die Position der Abstandshülse 81 wird in Axialrichtung auf der einen Seite durch einen Federring 84 und auf der gegenüberliegenden Seite durch Anlage an der Hohlwelle 47 festgelegt.

Der Stab 22 weist an seinem rückwärtigen, bremsscheibenabgewandten Ende ein Gewinde 85 auf. Dieses Gewinde 85 liegt im montierten Zustand außerhalb des Gehäuses des Bremssattels 1, da der Stab 22 eine Öffnung 86 in dem Bremssattel 1 durchgreift.

Die Öffnung 86 weitet sich kegelartig auf und dient unter Zwischenlagerung eines Dichtrings 87 der Aufnahme eines Keilrings 88.

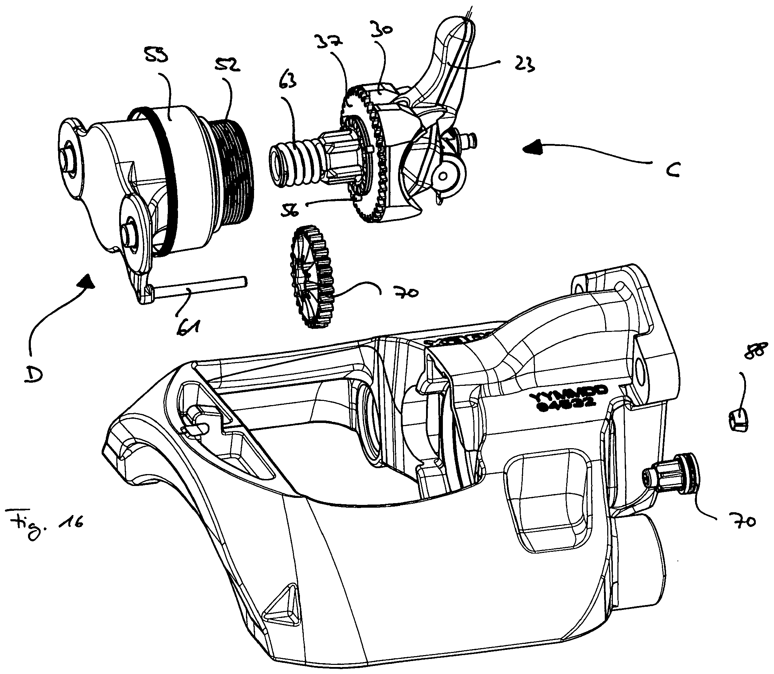

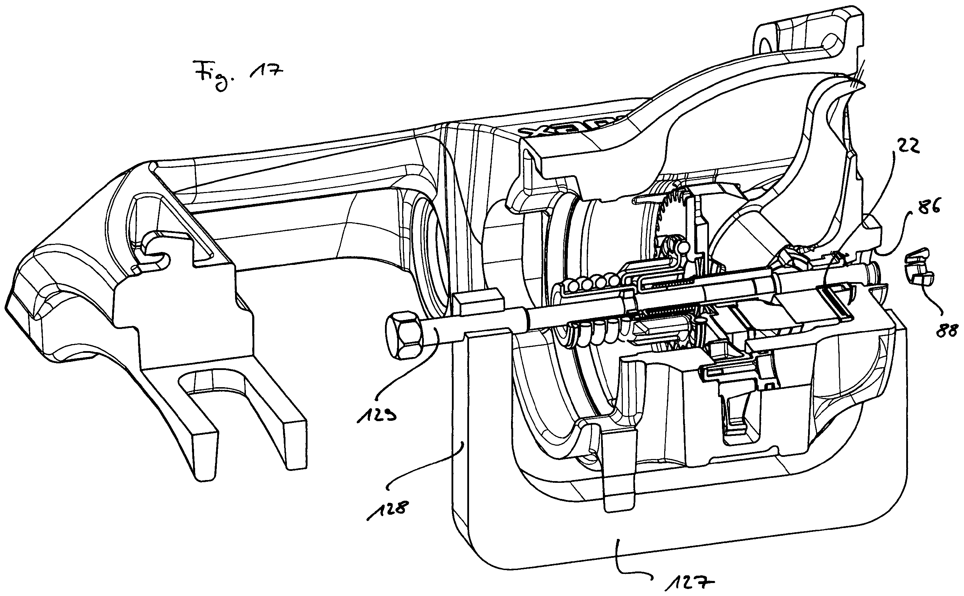

Während der Montage, wie weiter unten im Zusammenhang mit der Fig. 16 und 17 noch erläutert werden soll, wird der Keilring 88 mittels einer auf dem Gewinde 85 aufschraubbaren Befestigungsmutter 89 in der Öffnung 86 verspannt. Die Befestigungsmutter 89 wird noch von einer Endkappe 90 übergriffen.

Wie in den Figuren zu erkennen ist, weist der Stab 22 eine entsprechende Konturierung mit unterschiedlichen Durchmessern und Nutanordnungen auf, um die Lagerflächen und Montagemittel für die axiale Positionierung der oben geschilderten einzelnen Bauelemente zur Verfügung zu stellen.

Hierbei ist es ein wesentlicher Aspekt der Erfindung, dass der Stab 22 auf der einen Seite und die einzelnen auf diesem gelagerten Komponenten des Verstärkungsmechanismus 18, der Nachstelleinrichtung 19 und der Rückstelleinrichtung 21 auf der anderen Seite in Axialrichtung so dimensioniert und ausgestaltet sind, dass im eingebauten, im rückwärtigen Teil des Bremssattels verspannten Zustand des Stabs 22 die Schraubenfeder 63 eine definierte Drehmomentbegrenzung über eine dann ausgebildete permanente Vorspannung auf die in der Nachstelleinrichtung 19 in Form eines Rollen-Rampen-Mechanismus 35 vorliegende Momentkupplung ausübt.

Diese Drehmomentbegrenzung wird auch durch die entsprechenden Montageschritte des Bremsbetätigungsmechanismus 17 realisiert, wie weiter unten noch erklärt werden soll.

Die Funktionsweise des erfindungsgemäßen Bremsbetätigungsmechanismus 17 mit der Nachstelleinrichtung 19 ist wie folgt.

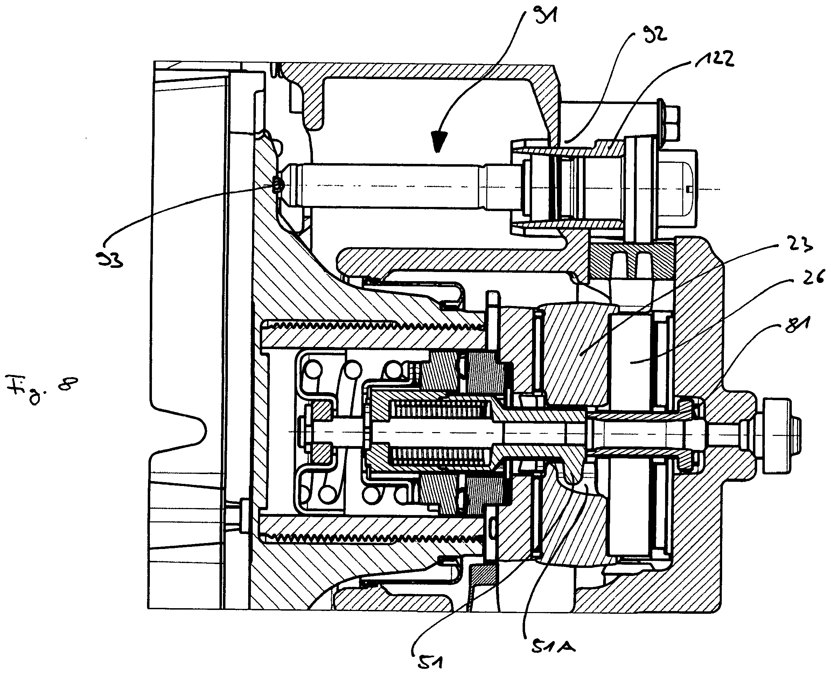

Wird vom Aktuator eine Kraft eingeleitet, schwenkt der Hebel 23 um die Exzenterwalzen 26 und versetzt über das zapfenartige Element 51 die Hohlwelle 47 in Drehung. Hierzu weist der Hebel 23 eine Ausnehmung oder Nut 51A auf, wie dies beispielsweise in der Fig. 8 zu erkennen ist.

Wenn noch kein Kontakt mit dem Bremsbelag 8 und der Bremsscheibe besteht und folglich keine Bremskraft übertragen wird, sperrt die Freilauffeder 49 die Hohlwelle 47 mit der inneren Aufnahmehülse 46, so dass sich beide gemeinsam drehen. Da die innere Aufnahmehülse 46 über die Verzahnung 50 drehfest mit dem Lagerring 38 verbunden ist, dreht sich auch dieser Lagerring 38 entsprechend mit.

Bedingt durch die von der Schraubenfeder 63 ausgeübte Federkraft, die die definierte Drehmomentbegrenzung bereitstellt, dreht der Lagerring 38 auch den Rampenkörper 36 und damit das mit diesem über die Keil-Nut-Verbindung 58 drehfest verbunden Zahnrad 37 und letztendlich dadurch die Nachstellspindel 52. Die Rollkörper 39 verbleiben hierbei ortsfest in den in dem Rampenkörper 36 auf der einen Seite und in den in dem Lagerring 38 ausgebildeten Rampenflächen 41 (siehe Fig. 4). Die Rampenflächen 41 sind durchgängig kreisförmig als ineinander übergehende Rampen ausgebildet, so dass jeweils ein Rollkörper 39 bei Bedarf in die nächste Rampenfläche 41 überspringen kann.

Da das Druckstück 53 in dem Gehäuse des Bremssattels 1 über die Führungsstange 61 ausschließlich axial geführt ist und daher nicht drehen kann, bewirkt eine Drehung der Nachstellspindel 52 eine axiale Verschiebung des Druckstücks 53. Hierdurch wird das Lüftspiel überbrückt.

Kommt nun während der Bremsbetätigung der Bremsbelag 8 mit der Bremsscheibe in Kontakt, bildet sich ein geschlossener Kraftfluss mit einer entsprechenden Gegenkraft zu der eingeleiteten Kraft aus. Bei ansteigender Kraft in Axialrichtung gibt es einen Punkt, an welchem das durch die Reibung in dem Gewinde 54 bedingte Drehmoment zwischen dem Druckstück 53 und der Nachstellspindel 52 größer sein wird, als das durch die Schraubenfeder 63 in die Momentkupplung induzierte Drehmoment für die Drehmomentbegrenzung. Infolgedessen bleiben die Nachstellspindel 52 und das Zahnrad 37 und damit der Rampenkörper 36 stehen.

Zu diesem Moment drehen sich jedoch die Hohlwelle 47, die innere Aufnahmehülse 46 und der Lagerring 38 weiter, was bewirkt, dass die Rollkörper 39 nicht mehr stationär verharren, sondern sich in den Rampenflächen 41 des Rampenkörpers 36 weiterbewegen und gegen diese Rampenflächen 41 auflaufen.

Da der Rampenkörper 36 gegenüber dem Kraftübertragungselement 30 über ein friktionsarmes Lagerelement 42 abgestützt ist, bewirkt das Auflaufen der Rollkörper 39, dass sich der Lagerring 38 von dem Rampenkörper 36 in Richtung auf die Bremsscheibe zu wegbewegt und so die Schraubenfeder 63 komprimiert. Diese Kompression erfolgt während des gesamten Bremsbetätigungshubs und bildet quasi den elastischen Anteil für die anschließende Rückstellbewegung aus.

Leitet der Aktuator keine Kraft mehr in den Bremsbetätigungsmechanismus 17 ein, beginnt die durch die Rückstelleinrichtung 21 unterstützte Rückstellbewegung.

Anfänglich besteht noch ein Kontakt zwischen dem Bremsbelag 8 und der Bremsscheibe, bei dem noch erhebliche Kräfte wirken. Die einzelnen Komponenten Zahnrad 37, Rampenkörper 36 und Lagerring 38 mit den Rollkörpern 39 dazwischen und die Hohlwelle 47 drehen sich dann in umgekehrter Drehrichtung, bis sie ihre ursprüngliche Winkelstellung zu Bremsbeginn wieder einnehmen. Diese Komponenten kehren ihre Bewegungen während des Bremshubs folglich entsprechend des vorhergehend erwähnten elastischen Anteils um.

Wenn während des erfolgten Bremshubs keine Abrasion am Bremsbelag 8 aufgetreten ist und daher kein Verschleiß am Bremsbelag 8 vorliegt, endet ein kraftleitender Kontakt zwischen den Bremsbelägen 8 und der Bremsscheibe exakt zu dem Zeitpunkt, zu dem die Komponenten Zahnrad 37, Rampenkörper 36, Lagerring 38 und Hohlwelle 47 ihre Ausgangswinkellage wieder einnehmen. Diese Komponenten verharren dann so lange in ihrer Stellung, bis das zapfenartige Element 51 bei der Schwenkbewegung des Hebels 23 in umgekehrter Schwenkrichtung an der gegenüberliegenden Anschlagsfläche der Verbindungsnut oder Ausnehmung 51A des Hebels 23, in welcher das zapfenartige Element 51 geführt ist, zum Anliegen kommt. Dann wird durch die rückwärtsgerichtete Schwenkbewegung des Hebels 23 die Hohlwelle 47 aktiv in umgekehrter Drehrichtung weitergedreht, während bedingt durch die Freilauffeder 49 die innere Aufnahmehülse 46 und der Lagerring 38 stehen bleiben. In dieser Phase rutscht die Freilauffeder 49 dann um einen solchen Winkel durch, der der Nachstellung des Lüftspiels während des Bremshubs entspricht.

Die Ausnehmung 51A des Hebels 23 ist unter Ausbildung eines Spiels etwas größer als die Dicke des zapfenartigen Elements 51 (siehe Fig. 8). Dieses Spiel entspricht dem Lüftspiel zwischen dem Bremsbelag 8 und der Bremsscheibe, das zu Zwecken der Funktionssicherheit nie nachgestellt wird.

Liegt dahingegen nach dem Bremshub ein Verschleiß am Bremsbelag 8 vor, beispielsweise nach einer starken Notbremsung, hebt sich der kraftleitende Kontakt zwischen den Bremsbelägen 8 und der Bremsscheibe auf, bevor die Komponenten Zahnrad 37, Rampenkörper 36 und Lagerring 38 mit den Rollkörpern 39 dazwischen ihre Ausgangswinkellage wieder einnehmen konnten.

Zu diesem Zeitpunkt bewirkt die durch die Schraubenfeder 63 in Axialrichtung auf die Momentkupplung ausgeübte Kraft, dass sich das Zahnrad 37 und damit die Nachstellspindel 52 in Drehung setzt, wodurch der Verschleiß ausgeglichen wird. Der weitere Bewegungsablauf der einzelnen Komponenten ist dann genauso, wie für den oben beschriebenen Fall ohne Verschleiß.

Die Nachstellung während der Freigabe der Bremse bzw. der Rückstellung des Druckstücks 53 und der Rückwärtsschwenkbewegung des Hebels 23 ist auch die Folge der geringen inneren Reibung und der dadurch bedingten geringen Hysterese des Rollen-Rampen-Mechanismus 35. Aus diesen Gründen wird gemäß der Erfindung ein Rollen-Rampen-Mechanismus als Momentkupplung verwendet, da dieser bei geringen Herstellungskosten die genaue Festlegung eines Drehmoments für eine Drehmomentbegrenzung erlaubt.

In den Fig. 8 bis 10 ist eine Sensoreinheit 91 für die Bestimmung des Belagverschleißes in einer speziellen Anordnung gezeigt.

Die Sensoreinheit 91 wird rückseitig durch eine Aufnahmeöffnung 92 in das Gehäuse des Bremssattels 1 eingeführt. An ihrem bremsscheibenseitigen Ende weist die Sensoreinheit 91 ein Mittel 93 zur Verbindung mit dem Druckstück 53 auf, beispielsweise ein wieder lösbares Klemm- oder Rastelement oder eine Steckverbindung mittels eines Stifts, das mit einem entsprechenden Element an dem Druckstück 53 zusammenwirkt.

Die Sensoreinheit 91 ist folglich so ausgelegt, dass sie die Relativbewegung des Druckstücks 53 gegenüber dem Bremssattel 1 während der Nachstellung des Lüftspiels detektiert.

Die Sensoreinheit 91 durchsetzt den Innenraum des Bremssattels 1 frei und parallel zu der Achse des Stabs 22.

Dabei ist die Sensoreinheit 91 einerseits in der Aufnahmeöffnung 92 im Bremssattel 1 und anderseits auf der gegenüberliegenden Seite durch die Verbindung mit dem Druckstück 53 mittels des Stiftelements 93 geführt, so dass eine im Wesentlichen strenge axiale Beweglichkeit ohne ein Kippen realisiert wird.

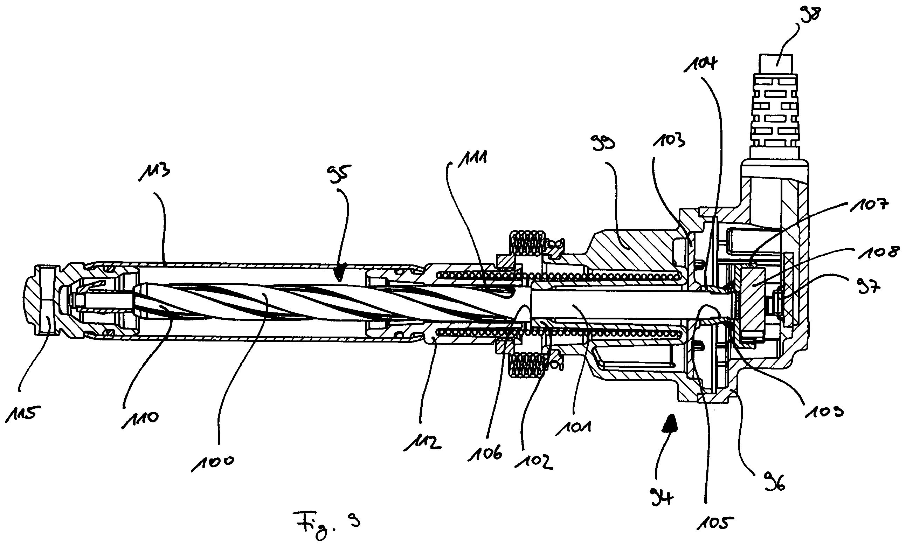

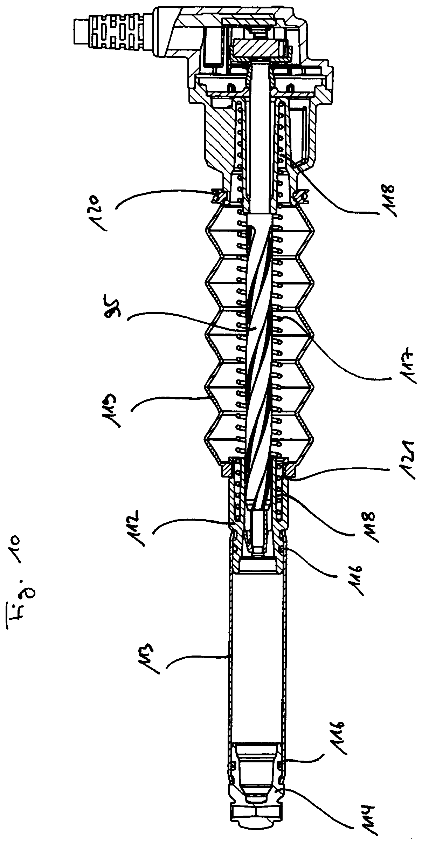

Wie in den Figuren 9 und 10 zu erkennen ist, besteht die Sensoreinheit 91 aus einem stationären, rückwärtigen Gehäuse 94, in dem ein Gewindeelement 95, beispielsweise eine Spindel, drehbar, aber nicht verschieblich geführt ist.

Das Gehäuse 94 weist einen rückwärtigen Gehäuseaufsatz 96 auf, der sich im eingebauten Zustand der Sensoreinheit 91 außerhalb des Gehäuses des Bremssattels 1 befindet. Dieser Gehäuseaufsatz 96 beinhaltet ein Sensorelement 97, welches bevorzugt aus zumindest einem Hall-Element besteht. An dem Gehäuseaufsatz 96 führt eine Leitung 98 zu einem Bordcomputer-Netzwerk, um den aktuellen Verschleißzustand abgreifen zu können.

Der Gehäuseaufsatz 96 ist auf einem Gehäuselagerteil 99 aufgesetzt und mit diesem fest, aber lösbar verbunden. Die Sensoreinheit 91 ist mittels des Gehäuselagerteils 99 in der Aufnahmeöffnung 92 des Bremssattels 1 befestigt.

Das Gehäuselagerteil 99 dient einerseits der drehbaren Lagerung der Spindel 95 und anderseits der Verbindung eines relativ zu diesem verschieblichen Übertragungselements.

Die Spindel 95, die einen Gewindeabschnitt 100 und einen Zylinderabschnitt 101 aufweist, ist mit letzterem in einer Führung 102 des Gehäuselagerteils 99 drehbar gelagert. Dabei ist die Spindel 95 axial in der vom Druckstück 53 abgewandten Richtung durch einen schulterartigen Übergang 106 zwischen dem Gewindeabschnitt 100 und dem Zylinderabschnitt 101 fixiert, der an der Führung 102 anstößt. In der auf das Druckstück 53 gerichteten Axialrichtung wird die Spindel durch eine Lagerhülse 104 axial positioniert und fixiert. Die Lagerhülse 104 stützt sich hierfür an einem Deckel 103 ab, der in das Gehäuselagerteil 99 eingesetzt ist. Des Weiteren greift die Lagerhülse 104 mit Zungen 109 in eine Fase 105 des Zylinderabschnitts 101 ein.

An dem rückwärtigen Ende der Lagerhülse 104 ist eine Führungsschale 107 vorgesehen, in der zumindest ein mit dem Ende der Spindel 95 rotationsfest verbundener Magnet 108 befestigt ist.

Der Magnet 108 dreht sich mit Abstand über dem Hall-Element des Sensorselements 97. Es handelt sich demzufolge um eine berührungslose Detektion des Verschleißes.

Der Gewindeabschnitt 100 der Spindel 95 weist ein Gewinde 110 mit einer sehr hohen Steigung auf. Das Gewinde 110 steht über ein Zapfenelement 111 mit einem Verschiebeblock 112 in Eingriff.

Der Verschiebeblock 112 ist relativ zu dem Gehäuselagerteil 99 beweglich und weist eine Hülse 113 auf, in das sich der Gewindeabschnitt 100 der Spindel 95 erstreckt. Die Hülse 113 endet in einem Endgehäuse 114, das eine Öffnung 115 für das Stiftelement 93 zur Verbindung mit dem Druckstück 53 aufweist. Die Hülse 113 dient zusammen mit Dichtringen 116 dem Schutz des Gewindeabschnitts 100 vor Schmutz.

Wie aus den Fig. 9 und 10 zu ersehen ist, verschiebt sich die aus dem Endgehäuse 114, der Hülse 113 und dem Verschiebeblock 112 bestehende Übertragungseinheit mit dem Druckstück 53 in Axialrichtung auf die Bremsscheibe zu oder von dieser weg. Diese Verschiebebewegung, aus welcher sich die Nachstellbewegung für den Verschleiß ableiten lässt, wird über die Kopplung mit dem Zapfenelement 111 in eine Drehbewegung der Spindel 95 transformiert, wobei die so hervorgerufene Rotation der Spindel 95 wiederum über den rotierenden Magneten 108 von dem Hall-Element 97 detektiert und dann entsprechend in einer Schaltungselektronik ausgewertet wird.

Gemäß der Erfindung ist die Steigung des Gewindes 110 so gewählt, dass die gesamte mögliche Länge des axialen Verschiebewegs der Hülse 113 bzw. des Verschiebeblocks 112 maximal in einer vollständigen Umdrehung der Spindel 95 resultiert. D.h. der Verschiebeweg der Nachstellung, der maximal möglich ist, bis die Bremsbeläge 8 und die Bremsscheibe vollständig abgeschliffen sind, überschreitet zu keinem Zeitpunkt eine 360°-Drehung der Spindel 95. Hierdurch kann die Messgenauigkeit über eine einfachere Schaltung erhöht werden.

Um stets einen einwandfreien Kontakt des Endgehäuses 114 mit dem Druckstück 53 zu gewährleisten und um stets eine einwandfreie Führung des Zapfenelements 111 in dem Gewinde 110 bei den Verschiebebewegungen des Verschiebeblocks 112 aufrechtzuerhalten, steht dieser gegenüber dem Gehäuselagerteil 99 unter einer Vorspannung, die durch eine Feder 117 zwischen diesen beiden Elementen bereitgestellt wird, die in entsprechenden Ausnehmungen 118 in diesen Elementen verankert ist. Die Spindel 95 und die Feder 117 sind gegenüber dem Innenraum des Bremssattels 1 durch einen Faltbalg 119 geschützt, der auf der einen Seite durch einen Klemmring 120 auf dem Gehäuselagerteil 99 und auf der anderen Seite in einer Nut 121 in dem Verschiebeblock 112 verliersicher befestigt ist.

Zur besseren Führung und Ausrichtung der Sensoreinheit 91, so dass diese stets parallel zu dem Stab 22 verläuft, ohne zu kippen, ist das Gehäuselagerteil 99 von einer Montagehülse 122 aufgenommen, die in die Aufnahmeöffnung 92 des Bremssattels 1 eingefügt ist.

Es wird deutlich, dass die Sensoreinheit 91 als Gesamtheit in dem Bremssattel 1 montiert und entnommen werden kann, ohne dass an übrigen Bauteilen des Bremsbetätigungsmechanismus 17 gearbeitet werden muss oder Teile davon zu Zwecken einer besseren Zugänglichkeit entfernt werden müssten. Um ein defektes Sensorelement 97 auszutauschen, ist es auch nicht notwendig, die gesamte Sensoreinheit auszutauschen, es genügt bereits, den Gehäuseaufsatz 96 von dem Gehäuselagerteil 99 abzunehmen.

Das Prinzip, den Verschleiß über die von dem Druckstück 53 vollführte lineare Nachstellbewegung zu erfassen, gestattet die Verwendung einer relativ einfachen und daher funktionssicheren Verwertungselektronik. Darüber hinaus, da keine weiteren Komponenten des Bremsbetätigungsmechanismus 17 auf die zu detektierende Bewegung Einfluss nehmen, lässt sich die Genauigkeit der Messung erhöhen.

In den Fig. 11 bis 22 sind die einzelnen Verfahrensschritte des erfindungsgemäßen Montageverfahrens gezeigt.

Die Montage des Bremsbetätigungsmechanismus kann mit unterschiedlichen Modulen erfolgen.

Fig. 11 zeigt exemplarisch die einzelnen Module für das Verfahren gemäß der Erfindung in einer ersten Ausführungsform in Explosionsdarstellung.

Der Bremsbetätigungsmechanismus 17 ist in zwei Module A und B aufgeteilt.

Das erste Modul A besteht aus
- dem kompletten Verstärkungsmechanismus 18 mit dem Hebel 23, den Exzenterwalzen 26, den Lagerschalen 27 und dem Kraftübertragungselement 30;
- der kompletten Nachstelleinrichtung mit der Momentkupplung, der Nachtstellspindel 52 und dem Zahnrad 37; und
- der in Fig. 11 nicht zu erkennenden innenliegenden Rückstelleinrichtung 21.

Alle Komponenten sind vormontiert und auf dem Stab 22 axial befestigt, so dass das Modul A als eine Einheit bewegt werden kann.

Das zweite Modul B besteht aus dem Druckstück 53 mit der Dichtmanschette 59 und mit der Führungsstange 61.

Als weitere Komponenten sind das Nachstellzahnrad 70 und dessen Achskörper 71 zu erkennen, sowie die Lage- und Befestigungsmittel 88, 89 für den Stab 22.

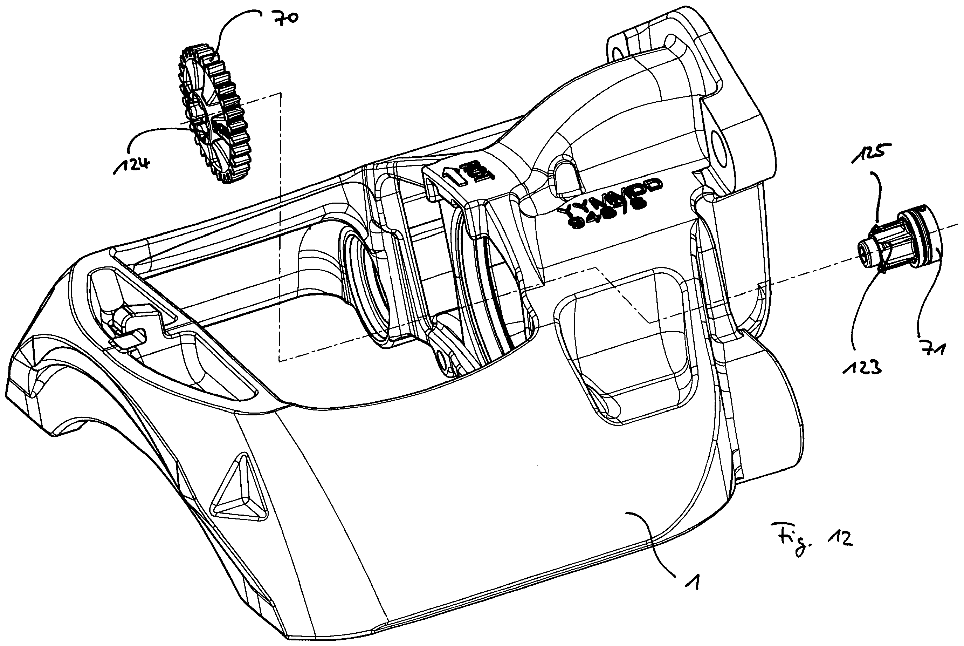

In den Fig. 12 bis 14 ist ein erster Montageschritt zu erkennen.

Das Nachstellzahnrad 70 wird durch die bremsscheibenseitige Öffnung 16 in das Innere des Gehäuses des Bremssattels 1 eingeführt, während gleichzeitig von der Rückseite durch die Öffnung 75 der Achskörper 71 eingefügt wird.

Der Achskörper 71 weist Keile 123 auf, die in entsprechende Innennuten 124 des Nachstellzahnrads 70 eingreifen. Des Weiteren weist der Achskörper 71 zwei einander gegenüberliegende Rastnasen 125 auf, die eine lösbare Rastverbindung zwischen dem Nachstellzahnrad 70 und dem Achskörper 71 ausbilden.

Durch Einfügen des stöpselartigen Achskörpers 71 in das Lagersackloch 73 in dem Gehäuse des Bremssattels 1 ist das Nachstellzahnrad 70 drehbar geführt.

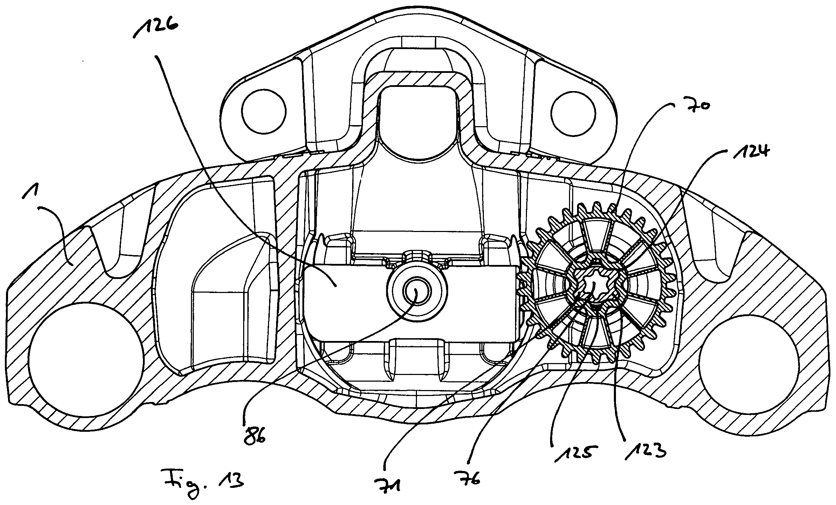

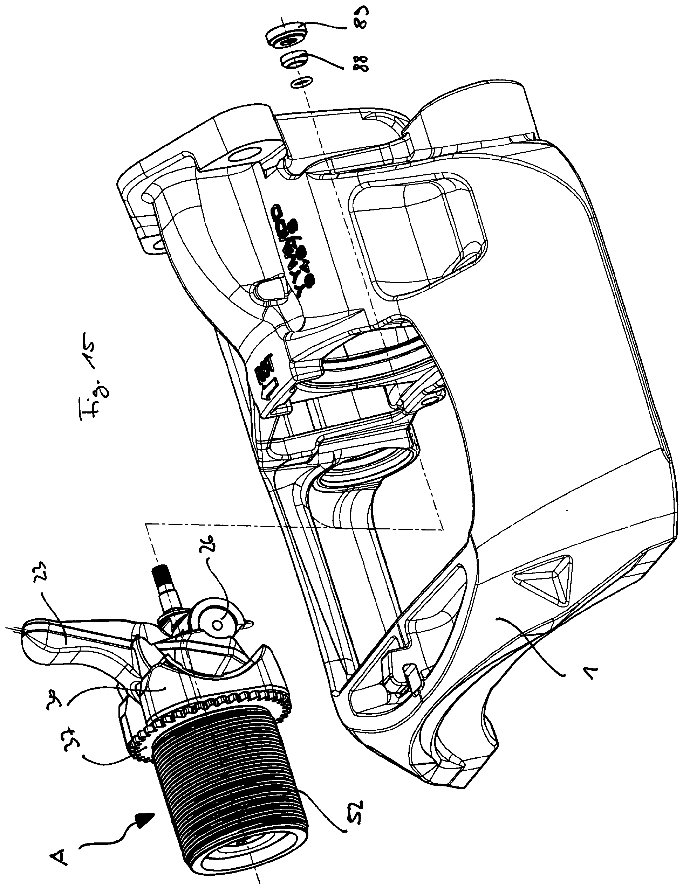

In einem nächsten Schritt, wie dieser in der Fig. 15 gezeigt ist, wird das Modul A vollständig durch die bremsscheibenseitige Öffnung 16 in das Innere des Gehäuses des Bremssattels 1 eingeführt derart, dass einerseits der Stab 22 mit seinem freien rückwärtigen Ende die Öffnung 86 durchsetzt und anderseits das Zahnrad 37 mit dem Nachstellzahnrad 70 in Eingriff gelangt. Hierbei kommen die Lagerschalen 27 der Exzenterwalzen 26 an entsprechenden Lagerflächen 126 (siehe Fig. 13) zur Anlage.

Die Öffnung 16 ist dabei gerade so groß gewählt, dass durch einfaches Kippen das Modul A mit dem Hebel 23 problemlos eingeführt werden kann.

In Fig. 16 ist in Explosionsdarstellung eine alternative Ausführungsform des Montageverfahrens gezeigt, bei welcher sich die Einteilung der Module mit ihren Komponenten von der vorhergehend beschriebenen Ausführungsform unterscheidet.

Hierbei ist die Nachstellspindel 52 bereits mit dem Druckstück 53 verschraubt.

Das erste Modul C besteht folglich aus
- dem kompletten Verstärkungsmechanismus 18 mit dem Hebel 23, den Exzenterwalzen 26, den Lagerschalen 27 und dem Kraftübertragungselement 30;
- teilweise der Nachstelleinrichtung mit der Momentkupplung und dem Zahnrad 37; und
- der kompletten Rückstelleinrichtung 21.

Das Modul D besteht aus dem Druckstück 53 mit der Dichtmanschette 59 und mit der Führungsstange 61, wobei die Nachstellspindel 52 bereits in das Druckstück 53 eingeschraubt ist.

Die Montage des Moduls C ist ähnlich wie bei dem Modul A.

Fig. 17 zeigt schematisch die Befestigung des Moduls C in dem Gehäuse des Bremssattels 1. Die Vorgehensweise ist für die Ausführungsform mit dem Modul A identisch, da es in diesem Verfahrensschritt darum geht, den Stab 22 in dem Bremssattel 1 zu befestigen.

Ein klammerartiges Haltewerkzeug 127 ist so ausgestaltet und dimensioniert, dass es den Bremssattel 1 außenseitig und unterhalb umgreifen kann. In einem Schenkel 128 des Haltewerkzeugs 127 ist eine Verstellschraube 129 drehbar gelagert.

Das Haltewerkzeug 127 wird an dem Bremssattel 1 so angebracht, das die Verstellschraube 129 an dem bremsschreibenseitigen Ende des Stabs 22 angreifen kann.

Durch Drehen der Verstellschraube 129 wird der Stab 22 nach hinten, d.h. von der Position der Bremsscheibe weg, verschoben und das gegenüberliegende freie Ende des Stabs 22 durch die Öffnung 86 nach außen bewegt. Zu diesem Zeitpunkt können die Lager- und Befestigungsmittel an dem Stab 22 angebracht werden.

Für die axiale Verspannung des Stabs 22 im rückwärtigen Gehäuseabschnitt des Bremssattels 1 werden zwei Alternativen vorgeschlagen.

Die in den Figuren 2 - 5, 7 - 8, 11, 15 und 19 - 22 jeweils gezeigte Ausführungsform nutzt einen Keilring 88, der in der Öffnung 86 einliegt und abschließend noch durch die Befestigungsmutter 89 verliersicher fixiert wird.

In der in den Figuren 16 - 18 dargestellten Ausführungsform werden zumindest zwei schalen- bzw. teilkreisförmige Keilsplinte 88 an den Stab 22 angelegt, dann wird die Verstellschraube 129 in umgekehrter Richtung gedreht, so dass der Stab 22 sich wieder zurückbewegen kann, und dadurch die Keilsplinte 88 in der kegelförmig sich nach außen erweiternden Öffnung 86 anliegen und so den Stab 22 verklemmen.

Bei in dem Gehäuse des Bremssattels 1 montierten Stab 22 steht die Schraubenfeder 63 unter einer definierten Vorspannung, die für die Drehmomentbegrenzung der Momentkupplung dient.

Fig. 18 zeigt schematisch einen weiteren Montageschritt des erfindungsgemäßen Verfahrens.

Nunmehr wird das Modul D in die Öffnung 16 eingefügt, so dass die Führungsstange 61 mit der entsprechenden Öffnung 62 hierfür ausgerichtet ist. Die Führungsstange 61 gleitet dann in die Öffnung 62, so dass das Modul D insgesamt nicht mehr drehbar ist.

Die Winkelstellung der Nachstellspindel 52 ist dabei so gewählt, dass auch die Sackbohrungen 57 in der Stirnseite der Nachstellspindel 52 mit den Stiftnieten 56 des Zahnrads 37 ausgerichtet sind.

Durch erneutes Anlegen des Haltewerkzeugs 127 an den Bremssattel 1 und durch anschließendes Drehen der Verstellschraube 129 wird das Modul D in Richtung auf das Modul C zu bewegt, bis beide Module über die Stiftnieten 56 eine feste Verbindung eingehen. Die durch die Verstellschraube 129 ausgeübte Kraft genügt, um eine Presspassung an den Verbindungselementen zwischen dem Zahnrad 37 und der Nachstellspindel 52 auszubilden.

Danach wird das Haltewerkzeug 127 mit der Verstellschraube 129 entfernt.

Bei der ersten Ausführungsform mit dem Modul A, das die Nachstellspindel 52 bereits integriert hat, erfolgt die anschließende Montage des Moduls B wie folgt.

Das Modul B wird über die Öffnung 16 an der bremsscheibenseitigen Stirnseite der Nachstellspindel 52 angesetzt, und zwar so, dass wieder die Führungsstange 61 mit der Öffnung 62 fluchtet. An der gegenüberliegenden Seite wird mittels eines entsprechenden Schraubwerkzeugs, das in die Fassung 76 des Achskörpers 71 eingreift, das Nachstellzahnrad 70 gedreht und damit über die Kopplung mit dem Zahnrad 37 die Nachstellspindel 52. Auf diese Art und Weise kann die Nachstellspindel 52 in das Druckstück 53 eingeschraubt werden bzw. auf Grund der Drehblockierung durch die Führungsstange 61 "zieht" die Nachstellspindel 52 das Modul B in das Inneres des Gehäuse des Bremssattels 1. Dieser Montageschritt ist exemplarisch in der Fig. 19 angedeutet.

Bevor jedoch das Modul B auf die Nachstellspindel 52 aufgeschraubt wird, muss die Vorspannung der Rückstelleinrichtung 21, die für die vorgesehenen Drehmomentbegrenzung definiert ist, abschließend eingestellt werden.

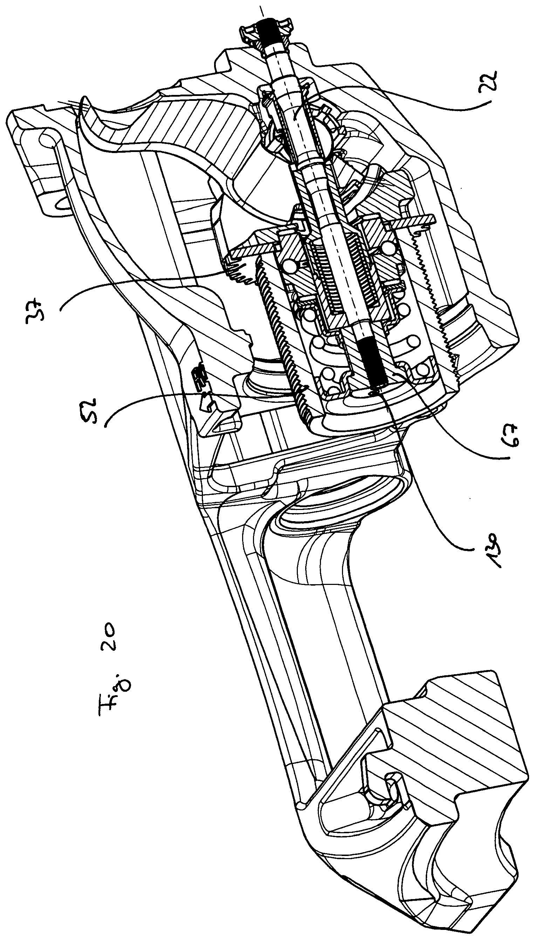

Bei der alternativen Ausführungsform (siehe Fig. 7) mit einer Gewindemutter 67 am bremsscheibenseitigen Ende des Stabs 22 weist diese Fassungen 130 für die Aufnahme eines entsprechenden Werkzeugs auf, beispielsweise eines Drehmomentschlüssels, mit welchem die Gewindemutter 67 gedreht werden kann, so dass sich diese von der Bremsscheibe weg bewegt und dadurch die Schraubenfeder 63 unter Ausbildung der gewünschten Vorspannung komprimiert. Dies ist exemplarisch in Fig. 20 angedeutet.

Das Druckstück 53 wird auf die Nachstellspindel 52 nur so weit aufgeschraubt, dass ein freies Ende 131 der Dichtmanschette 59 noch aus der Öffnung 16 ragt.

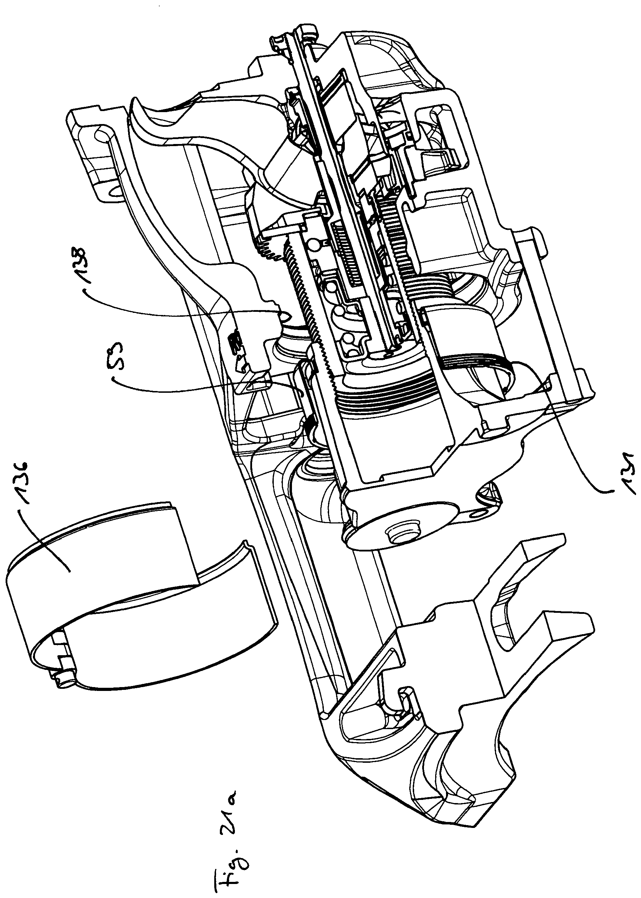

Wie die Fig. 21 a und 21 b zeigen, wird nun die Dichtmanschette 59 montiert. Hierzu wird ein weiteres klammerartiges Haltewerkzeug 132 so angebracht, dass es den Bremssattel 1 wiederum außenseitig unten umgreift.

Der bremsscheibenseitige Schenkel 133 ist als ein nach oben offener, das Druckstück 53 umgreifender Halbring 134 ausgebildet, der eine Nut 135 aufweist.

In diese Nut 135 wird eine separate, aus zwei zueinander schwenkbaren Hälften bestehende Werkzeugschubmanschette 136 eingefügt. An der der Nut 135 gegenüberliegenden Stirnseite greift die Werkzeugschubmanschette 136 an dem freiliegenden Ende 131 der Dichtmanschette 59 an.

Mittels einer an der dem Halbring 134 gegenüberliegenden Seite des Haltewerkzeugs 132 angeordneten weiteren Verstellschraube 137, die sich an dem rückwärtigen Gehäuse des Bremssattels 1 außenseitig abstützt, kann durch Verdrehen das gesamte Haltewerkzeug 132 mit der Werkzeugschubmanschette 136 in Richtung zu dem Gehäuse des Bremssattels 1, in den Fig. nach rechts, bewegt werden, bis das freie Ende 131 der Dichtmanschette 59 mit der Metalleinlage 60 an der entsprechenden Widerlagerfläche 138 im Inneren des Bremssattels 1 zur Anlage kommt. Dort wird es entweder verklemmt oder kann über Verkleben befestigt werden.

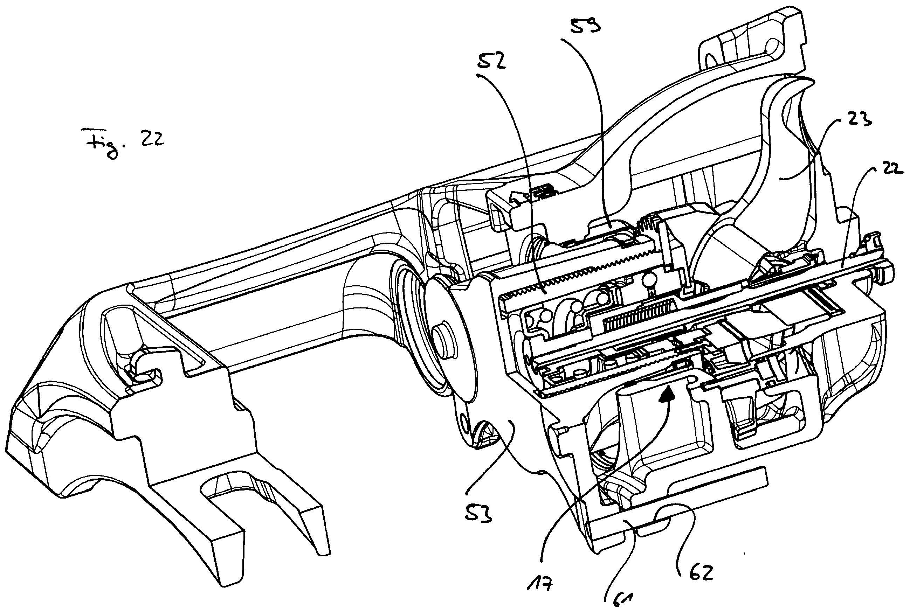

Danach werden auch diese Montagehilfsmittel entfernt. Abschließend wird über ein werkzeugunterstütztes Verdrehen des Achskörpers 71 das Nachstellzahnrad 70 und dadurch über das Zahnrad 37 die Nachstellspindel 52 so lange gedreht, bis das Druckstück 53 relativ zu der Nachstellspindel 52 seine Ausgangsposition eingenommen hat und der gesamte Bremsbetätigungsmechanismus 17 in seiner funktionalen Ausgangslage vorliegt. Dies ist exemplarisch in der Fig. 22 wiedergegeben.

**Bezugszeichenliste:**

| | | | |
|---|---|---|---|
| 1 | Bremssattel | 33 | Öffnung |
| 2 | Träger | 34 | Öffnung |
| 3 | Gleitlager | 35 | Rollen-Rampen-Mechanismus |
| 4 | Bolzen | 36 | Rampenkörper |
| 5 | Öffnungen | 37 | Zahnrad |
| 6 | Gleitlagerelemente | 38 | Lagerring |
| 7 | Endkappen | 39 | Rollkörper |
| 8 | Bremsbeläge | 40 | Rollkäfig |
| 9 | Belaghalter | 41 | Rampenflächen |
| 10 | Führungen | 42 | Friktionsarmes Lagerelement |
| 11 | Belaghalterfedern | 43 | Ausnehmung |
| 12 | Haltebügel | 44 | Friktionsarmes Lagerelement |
| 13 | Öffnung | 45 | Äußere Aufnahmehülse |
| 14 | Vorsprünge/Ausnehmungen | 46 | Innere Aufnahmehülse |
| 15 | Sperrvorrichtung | 47 | Hohlwelle |
| 16 | Öffnung | 48 | Sprengring |
| 17 | Bremsbetätigungsmechanismus | 49 | Freilauffeder |
| 18 | Verstärkungsmechanismus | 50 | Verzahnung |
| 19 | Nachstelleinrichtung | 51 | Zapfenartiges Element |
| 20 | Druckelement | 51A | Ausnehmung Hebel |
| 21 | Rückstelleinrichtung | 52 | Hohle Nachstellspindel |
| 22 | Stab | 53 | Druckstück |
| 23 | Hebel | 54 | Gewinde |
| 24 | Öffnung | 55 | Zapfen-Nut-Verbindung |
| 25 | Ende Hebel | 56 | Verbindungselemente |
| 26 | Exzenterwalzen | 57 | Sackbohrungen |
| 27 | Lagerschalen | 58 | Keil-Nut-Verbindung |
| 28 | Nadellagerkäfig | 59 | Dichtmanschette |
| 29 | Nadellagerschalen | 60 | Metalleinlagen |
| 30 | Kraftübertragungselement | 61 | Führungstange |
| 31 | Ausnehmungen | 62 | Öffnung |
| 32 | Öffnung | 63 | Schraubenfeder |
| 64 | Widerlagerschale | | |
| 65 | Abstandsring | 98 | Leitung |
| 66 | Sprengring | 99 | Gehäuselagerteil |
| 67 | Gewindemutter | 100 | Gewindeabschnitt |
| 68 | Gewinde | 101 | Zylinderabschnitt |
| 69 | Führungsring | 102 | Führung |
| 70 | Nachstellzahnrad | 103 | Deckel |
| 71 | Achskörper | 104 | Lagerhülse |
| 72 | Freies Ende | 105 | Fase |
| 73 | Lagersackloch | 106 | Schulterartiger Übergang |
| 74 | Ende | 107 | Führungsschale |
| 75 | Öffnung | 108 | Magnet |
| 76 | Fassung | 109 | Zungen |
| 77 | Verschlusskappe | 110 | Gewinde |
| 78 | Montageöffnung | 111 | Zapfenelement |
| 79 | Stöpsel | 112 | Verschiebeblock |
| 80 | Kanten Hebel | 113 | Hülse |
| 81 | Abstandshülse | 114 | Endgehäuse |
| 82 | Lagerfläche | 115 | Öffnung |
| 83 | | 116 | Dichtringe |
| 84 | Federring | 117 | Feder |
| 85 | Gewinde | 118 | Ausnehmungen |
| 86 | Öffnung | 119 | Faltenbalg |
| 87 | Dichtring | 120 | Klemmring |
| 88 | Keilsplinte/Keilring | 121 | Nut |
| 89 | Befestigungsmutter | 122 | Montagehülse |
| 90 | Endkappe | 123 | Keile |
| 91 | Sensoreinheit | 124 | Innennuten |
| 92 | Aufnahmeöffnung | 125 | Rastnasen |
| 93 | Stiftelement | 126 | Lagerflächen Bremssattel |
| 94 | Gehäuse | 127 | Haltewerkzeug |
| 95 | Gewindeelement/Spindel | 128 | Schenkel |
| 96 | Gehäuseaufsatz | 129 | Verstellschraube |
| 97 | Sensorelement/Hall-Element | 130 | Fassung Gewindemutter |
| 131 | Freies Ende Dichtmanschette | | |
| 132 | Haltewerkzeug | | |
| 133 | Schenkel | | |
| 134 | Halbring | | |
| 135 | Nut im Halbring | | |
| 136 | Werkzeugschubmanschette | | |
| 137 | Verstellschraube | | |
| 138 | Widerlagerfläche Bremssattel | | |
| | | | |
| A | Erstes Modul | | |
| B | Zweites Modul | | |
| C | Drittes Modul | | |
| D | Viertes Modul | | |

## Patentansprüche

1. Scheibenbremse aufweisend einen Bremssattel (1), der zumindest eine Bremsscheibe umgreift, und einen Bremsbetätigungsmechanismus (17) mit
- einem Verstärkungsmechanismus (18) zum Einleiten einer Zuspannkraft,
- einer Nachstelleinrichtung (19) zum Ausgleich eines Belagverschleißes mit einer Momentkupplung,
- einem Druckelement (20) zum Übertragen der Zuspannkraft auf die Bremsscheibe, und
- einer Rückstelleinrichtung (21),
wobei der Verstärkungsmechanismus (18), die Nachstelleinrichtung (19), das Druckelement (20) und die Rückstelleinrichtung (21) mittels eines in dem Gehäuse des Bremssattels (1) in Axialrichtung unbeweglich gelagerten Stabs (22) funktional zusammenwirkend in dem Bremssattel (1) montiert sind,
**dadurch gekennzeichnet, dass**
der Stab (22) in dem Gehäuse des Bremssattels (1) drehfest gelagert ist und dass
die Momentkupplung als ein Rollen-Rampen-Mechanismus (35) ausgebildet ist, der zwischen dem Verstärkungsmechanismus (18) und dem Druckelement (20) wirkt, wobei die Rollkörper (39) des Rollen-Rampen-Mechanismus (35) koaxial zu dem Stab (22) beweglich angeordnet sind.

2. Scheibenbremse nach Anspruch 1, bei welcher der Rollen-Rampen-Mechanismus (35) außerhalb des Kraftflusses der Zuspannkraft angeordnet ist.

3. Scheibenbremse nach Anspruch 2, bei welcher der Rollen-Rampen-Mechanismus (35) mit zumindest einem friktionsarmen Lagerelement (42;44) zusammenwirkt.

4. Scheibenbremse nach einem der Ansprüche 1, 2 oder 3, bei welcher der Verstärkungsmechanismus (18) einen Hebel (23) aufweist, der sich auf zumindest einer quer zu dem Stab (22) verlaufenden Exzenterlagerung (26) abstützt, wobei zwischen dem Hebel (23) und dem Druckelement (20) zumindest ein Kraftübertragungselement (30) angeordnet ist, durch welches die Zuspannkraft von dem Hebel (23) in das Druckelement (20) eingeleitet wird.

5. Scheibenbremse nach Anspruch 4, bei welcher das Druckelement (20) eine Nachstellspindel (52) aufweist, die mit einem Druckstück (53), das mit einem Bremsbelag (8) zusammenwirkt, in Gewindeeingriff steht, wobei das Druckstück (53) in dem Gehäuse des Bremssattels (1) axial drehfest geführt ist.

6. Scheibenbremse nach Anspruch 5, bei welcher die Nachstellspindel (52) als Hohlspindel ausgebildet ist, wobei die Rückstelleinrichtung (21) und der Rollen-Rampen-Mechanismus (35) im Inneren der Hohlspindel (52) angeordnet sind.

7. Scheibenbremse nach Anspruch 5 oder 6, bei welcher die Nachstellspindel (52) an ihrem bremsscheibenabgewandten Ende drehfest mit einem Zahnrad (37) verbunden ist, das sowohl mit dem zumindest einem Kraftübertragungselement (30) als auch mit dem Rollen-Rampen-Mechanismus (35) zusammenwirkt.

8. Scheibenbremse nach einem der Ansprüche 2 bis 7, bei welcher der Rollen-Rampen-Mechanismus (35) einen Rampenkörper (36), der mit dem Zahnrad (37) drehfest verbunden ist, und einen Lagerring (38) aufweist, und die Rollkörper (39) zwischen dem Rampenkörper (36) und dem Lagerring (38) frei beweglich gelagert sind.

9. Scheibenbremse nach Anspruch 8, bei welcher sich die Rückstelleinrichtung (21) an dem bremsscheibenseitigen Ende des Stabs (22) an einer Widerlagerschale (64) abstützt und dadurch auf den Lagerring (38) eine Federkraft ausübt.

10. Scheibenbremse nach Anspruch 9, bei welcher zwischen der Rückstelleinrichtung (21) und dem Lagerring (38) eine äußere Aufnahmehülse (45) angeordnet ist.

11. Scheibenbremse nach Anspruch 10, bei welcher zwischen dem Lagerring (38) und der äußeren Aufnahmehülse (45) sowie zwischen dem Rampenkörper (36) und dem Kraftübertragungselement (30) jeweils ein friktionsarmes Lagerelement (44;42) angeordnet ist.

12. Scheibenbremse nach Anspruch 10 oder 11, bei welcher der Rampenkörper (36), die Rollkörper (39), der Lagerring (38) und die äußere Aufnahmehülse (45) eine innere Aufnahmehülse (46) und eine Hohlwelle (47) koaxial einschließen, wobei die innere Aufnahmehülse (46) und die Hohlwelle (47) auf dem Stab (22) drehbar angeordnet sind.

13. Scheibenbremse nach Anspruch 12, bei welcher die innere Aufnahmehülse (46) und die Hohlwelle (47) in Axialrichtung durch eine Freilauffeder (49), diese auf dem Stab (22) koaxial einschließend, verbunden sind, wobei die Hohlwelle (47) von dem Hebel (23) in Drehung versetzbar angeordnet und die innere Aufnahmehülse (46) mit dem Lagerring (38) drehfest verbunden ist.

14. Scheibenbremse nach einem der Ansprüche 8 bis 13, bei welcher das Zahnrad (37) mit einem Nachstellzahnrad (70) in Eingriff steht, das in dem Gehäuse des Bremssattels (1) drehbar gelagert und von außerhalb des Gehäuses in Drehung versetzbar ist.

15. Scheibenbremse nach einem der Ansprüche 6 bis 14, bei welcher das Druckstück (53) zumindest eine Führungsstange (61) aufweist, die parallel zu dem Stab (22) außerhalb des Kraftflusses der Zuspannkraft in einer Öffnung (62) in dem Gehäuse des Bremssattels (61) gleitend geführt ist.

16. Scheibenbremse nach einem der vorhergehenden Ansprüche, bei welcher der Stab (22) den Verstärkungsmechanismus (18) und/oder die Nachstelleinrichtung (19) und/oder das Druckelement (20) und/oder die Rückstelleinrichtung (21) als eine selbsttragende Montageeinheit zusammen hält.

17. Verfahren zur Herstellung einer Scheibenbremse mit den Merkmalen gemäß Anspruch 1, aufweisend die Schritte
- Einführen eines Nachstellzahnrads (70) in das Gehäuse eines Bremssattels (1) und Befestigen auf einer Welle (71) in dem Gehäuse,
- Einführen einer ersten Einheit (A;B) bestehend aus einem Verstärkungsmechanismus (18), einer Nachstelleinrichtung (19) mit einem Zahnrad (37) und einer Rückstelleinrichtung (21) und einem diese zusammenhaltenden Stab (22) in das Gehäuse des Bremssattels (1), wobei der Stab (22) in einer rückwärtigen Öffnung (86) des Gehäuses des Bremssattels (1) eingeführt wird, so dass das Zahnrad (37) mit dem Nachstellzahnrad (70) in Gewindeeingriff gelangt,
- Anbringen eines Haltewerkzeugs (127) mit einem Verstellwerkzeug (129), wobei das Verstellwerkzeug (129) in dem Haltewerkzeug (127) drehbar geführt ist, an dem Bremssattel (1) derart, dass das Verstellwerkzeug (129) an dem bremsscheibenseitigen Ende des Stabs (22) angreift,
- Drehen des Verstellwerkzeugs (129), so dass ein gegenüberliegendes freies Ende des Stabs (22) durch die rückwärtige Öffnung (86) in dem Gehäuse des Bremssattels (1) nach außen verschoben wird,
- Anbringen von zumindest einem Lager- und Befestigungsmittel (88;89) an dem freien Ende des Stabs (22),
- Drehen des Verstellwerkzeugs (129) in umgekehrter Richtung, so dass sich der Stab (22) in umgekehrter Richtung verschiebt und das Lager- und Befestigungsmittel (88;89) in der rückwärtigen Öffnung (86) in dem Gehäuse des Bremssattels (1) verspannt und dadurch der Stab (22) in dem Gehäuse in Axialrichtung unbeweglich befestigt wird, und
- Entfernen des Haltewerkzeugs (127) mit dem Verstellwerkzeug (129),
wobei nach der Befestigung des Stabs (22) die Rückstelleinrichtung (21) unter einer definierten Vorspannung steht.

18. Verfahren nach Anspruch 17, wobei das Zahnrad (37) mit einer Nachstellspindel (52) verbunden ist, die weiteren Schritte aufweisend:
- Einführen eines Druckstücks (53) mit einer daran angebrachten Dichtmanschette (59) mit einem freien Ende in das Gehäuse des Bremssattels (1) derart, dass die Nachstellspindel (52) und das Druckstück (53) in Gewindeeingriff gelangen.

19. Verfahren nach Anspruch 17, die weiteren Schritte aufweisend
- Einführen einer weiteren Einheit (D) bestehend aus einer Nachstellspindel (52) und einem mit der Nachstellspindel (52) in Gewindeeingriff stehenden Druckstück (53) sowie aus einer an dem Druckstück (53) angebrachten Dichtmanschette (59) mit einem freien Ende in das Gehäuse des Bremssattels (1),
- Anbringen eines Haltewerkzeugs (127) mit einem Verstellwerkzeug (129) an dem Bremssattel (1) derart, dass das Verstellwerkzeug (129) an dem Druckstück (53) angreift,
- Drehen des Verstellwerkzeugs (129), bis die Nachstellspindel (52) mit dem Zahnrad (37) über entsprechende Verbindungsmittel (56;57) in einer festen Verbindung steht, und
- Entfernen des Haltewerkzeugs (127) mit dem Verstellwerkzeug (129).

20. Verfahren nach Anspruch 18 oder 19, wobei das Druckstück (53) eine Führungsstange (61) aufweist, die weiteren Schritte aufweisend
- Ausrichten der Führungsstange (61) mit einer entsprechenden Führungsöffnung (62) in dem Gehäuse des Bremssattels (1),
- Drehen des Nachstellzahnrads (70) derart, dass sich das Druckstück (53) unter gleitendem Einführen der Führungsstange (61) in die Führungsöffnung (62) auf die Nachstellspindel (52) bewegt.

21. Verfahren nach Anspruch 20, die weiteren Schritte aufweisend
- Anbringen eines weiteren Haltewerkzeugs (132) an dem Bremssattel (1) zur axialen Führung einer das Druckstück (53) umgreifenden Werkzeugschubmanschette (136), so dass die Werkzeugschubmanschette (136) mit der Dichtmanschette (59) in Kontakt gelangt,
- Verschieben der Werkzeugschubmanschette (136) derart, dass die Dichtmanschette (59) in das Gehäuse des Bremssattels (1) verschoben wird, bis das freie Ende (131) der Dichtmanschette (59) an einer entsprechenden radialen Lagerfläche (138) in dem Gehäuse des Bremssattels (1) zur Anlage kommt, und
- Entfernen des Haltewerkzeugs (132) mit der Werkzeugschubmanschette (136).

22. Verfahren nach Anspruch 21, den weiteren Schritt aufweisend
- Drehen des Nachstellzahnrads (70), bis das Druckstück (53) auf der Nachtstellspindel (52) in seine Betriebsposition gelangt ist.

## Claims

1. Disc brake comprising a brake caliper (1), which overlaps at least one brake disc, and a brake actuation mechanism (17) having
- an amplification mechanism (18) for introducing a clamping force,
- an adjustment device (19) for compensation of lining wear, the adjustment device (19) comprising a torque clutch,
- a thrust element (20) for transmitting the clamping force onto the brake disc, and
- a return device (21),
in which the amplification mechanism (18), the adjustment device (19), the thrust element (20) and the return device (21) are mounted in functional cooperation in the brake caliper (1) by means of a rod (22), which is non-moveably supported in axial direction in the housing of the brake caliper (1), **characterized in that** the rod (22) is rotatably fixedly supported in the housing of the brake caliper (1), and that
the torque clutch is formed as a roller-ramp-mechanism (35) which acts between the amplification mechanism (18) and the thrust element (20), in which the rollers (39) of the roller-ramp-mechanism (35) are moveably arranged co-axially with respect to the rod (22).

2. Disc brake according to claim 1, in which the roller-ramp-mechanism (35) is arranged outside of the flow of forces of the clamping force.

3. Disc brake according to claim 2, in which the roller-ramp-mechanism (35) interacts with at least one low friction-bearing element (42; 44).

4. Disc brake according to one of claims 1, 2 or 3, in which the amplification mechanism (18) comprises a lever (23) which is supported against at least one eccentric support (26) being transverse to the rod (22), in which at least one force-transmitting element (30) is arranged between the lever (23) and the thrust element (20) by means of which the clamping force from the lever (23) is introduced into the thrust element (20).

5. Disc brake according to claim 4, in which the thrust element (20) comprises an adjustment spindle (52), which is in threaded engagement with a thrust piece (53) which cooperates with a brake lining (8), in which the thrust piece (53) is axially non-rotatably guided in the housing of the brake caliper (1).

6. Disc brake according to claim 5, in which the adjustment spindle (52) is formed as a hollow spindle, in which the return device (21) and the roller-ramp-mechanism (35) are arranged inside the hollow spindle (52).

7. Disc brake according to claim 5 or 6, in which the adjustment spindle (52) at its end facing away from the brake disc is non-rotatably connected with a gear wheel (37) which cooperates with both the at least one force-transmitting element (30) and the roller-ramp-mechanism (35) .

8. Disc brake according to one of the claims 2 to 7, in which the roller-ramp-mechanism (35) comprises a ramp body (36), which is non-rotatably connected with the gear wheel (37), and a bearing ring (38), and in which the rollers (39) are freely moveably supported between the ramp body (36) and the bearing ring (38).

9. Disc brake according to claim 8, in which the return device (21) is supported at the end of the rod (22) facing the brake disc at an abutment cup (64) and thereby applies a spring force onto the bearing ring (38).

10. Disc brake according to claim 9, in which an external holding sleeve (45) is arranged between the return device (21) and the bearing ring (38).

11. Disc brake according to claim 10, in which a low friction-bearing element (44; 42) is arranged between the bearing ring (38) and the external holding sleeve (45) and between the ramp body (36) and the force-transmitting element (30), respectively.

12. Disc brake according to claim 10 or 11, in which the ramp body (36), the rollers (39), the bearing ring (38) and the external holding sleeve (45) co-axially enclose an internal holding sleeve (46) and a hollow shaft (47), in which the internal holding sleeve (46) and the hollow shaft (47) are rotatably arranged on the rod (22).

13. Disc brake according to claim 12, in which the internal holding sleeve (46) and the hollow shaft (47) are connected in axial direction by means of a one-way spring (49) thereby enclosing the one-way spring (49) co-axially on the rod (22), in which the hollow shaft (47) is arranged to be set into rotation by the lever (23) and the internal holding sleeve (46) is non-rotatably connected with the bearing ring (38).

14. Disc brake according to one of claims 8 to 13, in which the gear wheel (37) is in engagement with an adjustment pinion (70) which is rotatably supported in the housing of the brake caliper (1) and can be set into rotation from the outside of the housing.

15. Disc brake according to one of claims 6 to 14, in which the thrust piece (53) comprises at least one guiding pin (61) which is slideably guided in an opening (62) in the housing of the brake caliper (1) in parallel to the rod (22) and outside of the flow of forces of the clamping force.

16. Disc brake according to one of the preceding claims, in which the rod (22) keeps together the amplification mechanism (18) and/or the adjustment device (19) and/or the thrust element (20) and/or the return device (21) as a self-supported assembly unit.

17. Method for manufacturing a disc brake having the features according to claim 1, comprising the steps
- inserting of an adjustment pinion (70) into the housing of a brake caliper (1) and fixing on a shaft (71) in the housing,
- inserting of a first unit (A; B) comprising an amplification mechanism (18), an adjustment device (19) having a gear wheel (37) and a return device (21) and a rod (22) keeping these elements together into the housing of the brake caliper (1), in which the rod (22) will be inserted through a rear opening (86) of the housing of the brake caliper (1) so that the gear wheel (37) comes into threaded engagement with the adjustment pinion (70),
- attaching of a support tool (127) with an adjustment tool (129), in which the adjustment tool (129) is rotatably guided in the support tool (127), at the brake caliper (1) such that the adjustment tool (129) attaches at the end of the rod (22) facing the brake disc,
- rotating of the adjustment tool (129) so that an opposite free end of the rod (22) will be displaced through the rear opening (86) in the housing of the brake caliper (1) to the outside,
- attaching of at least one support and fixation means (88; 89) at the free end of the rod (22),
- rotating of the adjustment tool (129) in reverse direction so that the rod (22) is displaced in opposite direction and interlocks the support and fixation means (88, 89) in the rear opening (86) in the housing of the brake caliper (1) and thereby the rod (22) will be non-rotatably fixed in the housing in axial direction, and
- removing of the support tool (127) with the adjustment tool (129),
in which after fixation of the rod (22) the return device (21) is biased by a defined pretension.

18. Method according to claim 17, in which the gear wheel (37) is connected with an adjustment spindle (52), comprising the further steps:
- inserting of a thrust piece (53) with a sealing sleeve (59) attached thereto with a free end into the housing of the brake caliper (1) such that the adjustment spindle (52) and the thrust piece (53) come into threaded engagement.

19. Method according to claim 17, comprising the further steps
- inserting of a further unit (D), which comprises an adjustment spindle (52) and a thrust piece (53) being in threaded engagement with the adjustment spindle (52) and a sealing sleeve (59) being attached to the thrust piece (53), with a free end into the housing of the brake caliper (1),
- attaching of a support tool (127) with an adjustment tool (129) at the brake caliper (1) such that the adjustment tool (129) attaches to the thrust piece (53),
- rotating of the adjustment tool (129) till the adjustment spindle (52) is in a fixed connection with the gear wheel (37) by means of corresponding connecting means (56; 57), and
- removing of the support tool (127) with the adjustment tool (129).

20. Method according to claim 18 or 19, in which the thrust piece (53) comprises a guiding pin (61), comprising the further steps
- aligning of the guiding pin (61) with a corresponding guiding opening (62) in the housing of the brake caliper (1),
- rotating of the adjustment pinion (70) such that the thrust piece (53) is moved onto the adjustment spindle (52) by sliding insertion of the guiding pin (61) into the guiding opening (62).

21. Method according to claim 20, comprising the further steps
- attaching of a further support tool (132) at the brake caliper (1) for axial guiding a push sleeve tool (136) surrounding the thrust piece (53) so that the push sleeve tool (136) comes into contact with the sealing sleeve (59),
- displacing of the push sleeve tool (136) such that the sealing sleeve (59) is displaced into the housing of the brake caliper (1) till the free end (131) of the sealing sleeve (59) abuts against a corresponding radial support surface (138) in the housing of the brake caliper (1), and
- removing of the support tool (132) with the push sleeve tool (136).

22. Method according to claim 21, comprising the further step
- rotating of the adjustment pinion (70) till the thrust piece (53) comes into its operating position on the adjustment spindle (52).

## Revendications

1. Frein à disque présentant un étrier de frein (1), qui enveloppe au moins un disque de frein, et un mécanisme d'actionnement de frein (17) avec
- un mécanisme d'amplification (18) pour déclencher une force d'application du frein,
- un dispositif de réglage (19) pour compenser l'usure des garnitures avec un raccord rapide,
- un élément de pression (20) pour transmettre la force d'application au disque de frein, et
- un dispositif de rappel (21),
dans lequel le mécanisme d'amplification (18), le dispositif de réglage (19), l'élément de pression (20) et le dispositif de rappel (21) sont montés en coopération fonctionnelle dans l'étrier de frein (1) au moyen d'une tige (22) montée de façon immobile en direction axiale dans le boîtier de l'étrier de frein (1),
**caractérisé en ce que** la tige (22) est montée de façon calée en rotation dans le boîtier de l'étrier de frein (1) et **en ce que** le raccord rapide est formé par un mécanisme de rampe à rouleaux (35) qui opère entre le mécanisme d'amplification (18) et l'élément de pression (20), dans lequel les corps roulants (39) du mécanisme de rampe à rouleaux (35) sont disposés de façon mobile coaxialement à la tige (22).

2. Frein à disque selon la revendication 1, dans lequel le mécanisme de rampe à rouleaux (35) est disposé à l'extérieur du flux de force de la force d'application du frein.

3. Frein à disque selon la revendication 2, dans lequel le mécanisme de rampe à rouleaux (35) coopère avec au moins un élément de palier à faible frottement (42 ; 44).

4. Frein à disque selon l'une quelconque des revendications 1, 2 ou 3, dans lequel le mécanisme d'amplification (18) présente un levier (23) qui prend appui sur au moins un appui excentrique (26) s'étendant transversalement à la tige (22), dans lequel au moins un élément de transmission de force (30) est disposé entre le levier (23) et l'élément de pression (20), par lequel la force d'application est introduite par le levier (23) dans le dispositif de pression (20).

5. Frein à disque selon la revendication 4, dans lequel l'élément de pression (20) présente une broche de réglage (52) qui est en engagement vissé avec une pièce de pression (53) qui coopère avec une garniture de frein (8) dans lequel la pièce de pression (53) est guidée axialement sans rotation dans le boîtier de l'étrier de frein (1).

6. Frein à disque selon la revendication 5, dans lequel la broche de réglage (52) est formée par une broche creuse, dans lequel le dispositif de rappel (21) et le mécanisme de rampe à rouleaux (35) sont disposés à l'intérieur de la broche creuse (52).

7. Frein à disque selon la revendication 5 ou 6, dans lequel la broche de réglage (52) est reliée par son extrémité située à l'opposé au disque de frein de façon calée en rotation à une roue dentée (37), qui coopère aussi bien avec ledit au moins un élément de transmission de force (30) qu'avec le mécanisme de rampe à rouleaux (35).

8. Frein à disque selon l'une quelconque des revendications 2 à 7, dans lequel le mécanisme de rampe à rouleaux (35) présente un corps de rampe (36) qui est relié de façon calée en rotation à la roue dentée (37) et une bague de palier (38), et les corps roulants (39) sont montés de façon librement mobile entre le corps de rampe (36) et la bague de palier (38).

9. Frein à disque selon la revendication 8, dans lequel le dispositif de rappel (21) prend appui par l'extrémité de la tige (22) proche du disque de frein sur une coupelle de contre-appui (64) et exerce de ce fait une force de ressort sur la bague de palier (38).

10. Frein à disque selon la revendication 9, dans lequel une douille de réception extérieure (45) est disposée entre le dispositif de rappel (21) et la bague de palier (38) .

11. Frein à disque selon la revendication 10, dans lequel un élément de palier à faible frottement (44 ; 42) est disposé respectivement entre la bague de palier (38) et la douille de réception extérieure (45) ainsi qu'entre le corps de rampe (36) et l'élément de transmission de force (30) .

12. Frein à disque selon la revendication 10 ou 11, dans lequel le corps de rampe (36), les corps roulants (39), la bague de palier (38) et la douille de réception extérieure (45) entourent de façon coaxiale une douille de réception intérieure (46) et un arbre creux (47), dans lequel la douille de réception intérieure (46) et l'arbre creux (47) sont agencés de façon rotative sur la tige (22) .

13. Frein à disque selon la revendication 12, dans lequel la douille de réception intérieure (46) et l'arbre creux (47) sont reliés en direction axiale par un ressort roue libre (49), en entourant celui-ci de façon coaxiale sur la tige (22), dans lequel l'arbre creux (47) peut être mis en rotation par le levier (23) et la douille de réception intérieure (46) est reliée de façon calée en rotation à la bague de palier (38).

14. Frein à disque selon l'une quelconque des revendications 8 à 13, dans lequel la roue dentée (37) est en prise avec une roue dentée de réglage (70) qui est montée de façon rotative dans le boîtier de l'étrier de frein (1) et peut être mise en rotation de l'extérieur du boîtier.

15. Frein à disque selon l'une quelconque des revendications 6 à 14, dans lequel la pièce de pression (53) présente au moins une tige de guidage (61), qui est guidée de façon glissante parallèlement à la tige (22) à l'extérieur du flux de force de la force d'application dans une ouverture (62) dans le boîtier de l'étrier de frein (61) .

16. Frein à disque selon l'une quelconque des revendications précédentes, dans lequel la tige (22) solidarise le mécanisme d'amplification (18) et/ou le dispositif de réglage (19) et/ou l'élément de pression (20) et/ou le dispositif de rappel (21) en une unité de montage autoporteuse.

17. Procédé de fabrication d'un frein à disque présentant les caractéristiques de la revendication 1, comportant les étapes suivantes :
- introduire une roue dentée de réglage (70) dans le boîtier d'un étrier de frein (1) et la fixer sur un arbre (71) dans le boîtier,
- introduire une première unité (A ; B) composée d'un mécanisme d'amplification (18), d'un dispositif de réglage (19) avec une roue dentée (37) et d'un dispositif de rappel (21) et d'une tige (22) solidarisant ceux-ci dans le boîtier de l'étrier de frein (1), dans lequel on introduit la tige (22) dans une ouverture arrière (86) du boîtier de l'étrier de frein (1), de telle manière que la roue dentée (37) vienne en engagement vissé avec la roue dentée de réglage (70),
- appliquer un outil de maintien (127) avec un outil de réglage (129), dans lequel l'outil de réglage (129) est guidé de façon rotative dans l'outil de maintien (127), à l'étrier de frein (1), de telle manière que l'outil de réglage (129) agisse sur l'extrémité de la tige (22) proche du disque de frein,
- faire tourner l'outil de réglage (129), de telle manière qu'une extrémité libre opposée de la tige (22) soit déplacée vers l'extérieur à travers l'ouverture arrière (86) dans le boîtier de l'étrier de frein (1),
- appliquer au moins un moyen de support et de fixation (88 ; 89) à l'extrémité libre de la tige (22),
- faire tourner l'outil de réglage (129) dans le sens contraire, de telle manière que la tige (22) se déplace en sens opposé et que le moyen de support et de fixation (88 ; 89) soit serré dans l'ouverture arrière (86) dans le boîtier de l'étrier de frein (1) et que la tige (22) soit de ce fait fixée dans le boîtier d'une façon immobile en direction axiale, et
- enlever l'outil de maintien (127) avec l'outil de réglage (129),
dans lequel après la fixation de la tige (22) le dispositif de rappel (21) se trouve sous une précontrainte définie.

18. Procédé selon la revendication 17, dans lequel la roue dentée (37) est reliée à une broche de réglage (52), présentant les autres étapes suivantes :
- introduire une pièce de pression (53) avec une manchette d'étanchéité (59) agencée sur celle-ci par une extrémité libre dans le boîtier de l'étrier de frein (1), de telle manière que la broche de réglage (52) et la pièce de pression (53) viennent en engagement vissé.

19. Procédé selon la revendication 17, présentant les autres étapes suivantes :
- introduire une autre unité (D) composée d'une broche de réglage (52) et d'une pièce de pression (53) se trouvant en engagement vissé avec la broche de réglage (52), ainsi que d'une manchette d'étanchéité (59) agencée sur la pièce de pression (53) par une extrémité libre dans le boîtier de l'étrier de frein (1),
- appliquer un outil de maintien (127) avec un outil de réglage (129) à l'étrier de frein (1), de telle manière que l'outil de réglage (129) agisse sur la pièce de pression (53),
- faire tourner l'outil de réglage (129), jusqu'à ce que la broche de réglage (52) se trouve en liaison fixe avec la roue dentée (37) à l'aide de moyens de liaison correspondants (56 ; 57), et
- enlever l'outil de maintien (127) avec l'outil de réglage (129).

20. Procédé selon la revendication 18 ou 19, dans lequel la pièce de pression (53) présente une tige de guidage (61), présentant les autres étapes suivantes :
- aligner la tige de guidage (61) avec une ouverture de guidage correspondante (62) dans le boîtier de l'étrier de frein (1),
- faire tourner la roue dentée de réglage (70), de telle manière que la pièce de pression (53) se déplace sur la broche de réglage (52) avec introduction glissante de la tige de guidage (61) dans l'ouverture de guidage (62).

21. Procédé selon la revendication 20, présentant les autres étapes suivantes :
- appliquer un autre outil de maintien (132) à l'étrier de frein (1) pour le guidage axial d'une manchette de poussée d'outil (136) enveloppant la pièce de pression (53), de telle manière que la manchette de poussée d'outil (136) vienne en contact avec la manchette d'étanchéité (59),
- déplacer la manchette de poussée d'outil (136) de telle manière que la manchette d'étanchéité (59) soit déplacée dans le boîtier de l'étrier de frein (1), jusqu'à ce que l'extrémité libre (131) de la manchette d'étanchéité (59) vienne s'appliquer sur une face d'appui radiale correspondante (138) dans le boîtier de l'étrier de frein (1), et
- enlever l'outil de maintien (132) avec la manchette de poussée d'outil (136).

22. Procédé selon la revendication 21, présentant l'autre étape suivante :
- faire tourner la roue dentée de réglage (70), jusqu'à ce que la pièce de pression (53) soit arrivée dans sa position de fonctionnement sur la broche de réglage (52).
